# EUROPEAN PATENT APPLICATION

(11) **EP 2 555 512 A1**
(43) Date of publication of application: **06.02.2013**
(21) Application number: 11759640.3
(22) Date of filing: 28.03.2011
(51) Int. Cl.: H04N 7/173, G09G 5/00, H04N 5/57

(54) **DISPLAY APPARATUS, CONTROL APPARATUS, TELEVISION RECEIVER, METHOD OF CONTROLLING DISPLAY APPARATUS, PROGRAM, AND RECORDING MEDIUM**

(30) Priority: 28.03.2011 JP 2011071138; 31.03.2010 JP 2010083351; 26.03.2010 JP 2010072919
(71) Applicant: Sharp Kabushiki Kaisha, Osaka-shi, Osaka 545-8522 (JP)
(72) Inventor: TAKIGUCHI, Masahiko, Osaka-shi, Osaka 545-8522 (JP); TAKAKU, Kohichi, Osaka-shi, Osaka 545-8522 (JP); ASAI, Shingo, Osaka-shi, Osaka 545-8522 (JP)
(74) Representative: Müller - Hoffmann & Partner
(86) International application number: PCT/JP2011/057718
(87) International publication number: WO 2011/118838

(57) **Abstract**

A display apparatus (10) of the present invention which includes a display section (25) for displaying an image and which is operated by an operation terminal, includes an executing section (12) for executing an operation of the display apparatus; a remote-controller-light receiving section (20) that receives a signal containing identification information for identifying a user using the operation terminal, the signal being sent from the operation terminal; and a recording section (22) in which a plurality of sets of associated information are recorded, each of the plurality of sets of associated information being information in which identification information and setting information used for execution of the operation by the executing means are associated with each other, the executing means (12) (i) acquiring setting information corresponding to the identification information received by the remote-controller-light receiving section from among the plurality of sets of associated information recorded on the recording section (22) and (ii) executing the operation on a basis of the setting information thus acquired. This allows setting to be easily switched to setting suited to a user who is using the display apparatus (10).

## Description

### Technical Field

The present invention relates to a control apparatus and a television receiver which includes a display section for displaying an image, a method for controlling a display apparatus, a program, and a recording medium. Specifically, the present invention relates to a display apparatus etc. which changes setting depending on a user.

### Background Art

Conventionally, there is a technique of changing various settings of a display apparatus, such as adjustment of image quality, depending on what kind of operation has been made by a user or under what kind of environment the display apparatus is being used.

For example, Patent Literature 1 discloses an image display apparatus which determines an image quality parameter by presenting, to a user, a plurality of sample images having different image quality parameters and prompting the user to select a desired sample image.

Patent Literature 2 discloses a television receiver which determines an image quality by prompting a user to select a desired one from sample moving images having different image qualities.

Patent Literature 3 discloses a system in which (i) properties, such as topic and theme information, of a program that is being broadcast is determined and (ii) data such as audio and video setting values are fitted into a table of predefined optimum receiver properties that is stored in a recording unit.

Further, a technique of photographing a user's face and recognizing the user with the use of an image thus obtained is utilized in devices such as a device which requires an age limit and a device which aims for improvement in convenience of a user.

Patent Literature 4 discloses a face image certification device. In this face image certification device, it is determined whether those recognized by this face image certification device include a person of a predetermined age or over, by comparing features for each age group that are stored in advance with features extracted from a photographed image. In a case where such a person of a predetermined age or over is included, a predetermined operation (e.g., purchasing operation in a vending machine) is permitted.

Patent Literature 5 discloses an information terminal device. In this information terminal device, an age of a user is estimated from a user's face image and an operation screen corresponding to the age thus estimated is displayed.

Patent Literature 6 discloses a recording/reproducing device. In this recording/ reproducing device, a user's face is photographed, and a user that is registered in advance is recognized on the basis of an image of the user's face thus photographed. Then, information on programs that have been recorded or information on programs that are being broadcast are displayed on a display apparatus on the basis of preference information on the user thus recognized. With the arrangement, program information corresponding to a user that is registered in advance can be automatically displayed. This saves the user the trouble of operating a remote controller or the like.

Patent Literature 7 discloses a display system in which (i) an infrared angular sensor is provided in a display apparatus, (ii) watching angles at which viewers operate a display section by remote control are registered in a remote controller, and (iii) an angle registration signal is outputted.

Non-Patent Literature 1 discloses a television which automatically adjust an image quality so that an optimum image quality is displayed in accordance with brightness of a room and a color of lighting.

Non-Patent Literature 2 discloses a method for estimating a perceived age of a user.

### Citation List

Patent Literature 1
   Japanese Patent Application Publication, Tokukai, No. 2007-147828 A (Publication Date: June 14, 2007)
Patent Literature 2
   Japanese Patent Application Publication, Tokukai, No. 2001-119644 A (Publication Date: April 27, 2001)
Patent Literature 3
   Japanese translation of PCT application, Tokuhyo, No. 2001-515675 A (Publication Date: September 18, 2001)
Patent Literature 4
   Japanese Patent Application Publication, Tokukai, No. 2001-256496 A (Publication Date: September 21, 2001)
Patent Literature 5
   Japanese Patent Application Publication, Tokukai, No. 2006-119920 A (Publication Date: May 11, 2006)
Patent Literature 6
   Japanese Patent Application Publication, Tokukai, No. 2006-100881 A (Publication Date: April 13, 2006)
Patent Literature 7
   Japanese Patent Application Publication, Tokukai, No. 2008-180860 A (Publication Date: August 7, 2008)
Non-Patent Literature 1
   "Omakase Donpisha Kogasitsu (automatic adjustment of highest image quality)" [online], toshiba, [retrieved on January, 18, 2010], internet <http: / /www.toshiba.co.jp/regza/detail/omakase/about.ht ml>
Non-Patent Literature 2
   "2008 Research Topics: Kao No Katati To Insho (Face Shape and Impression)" [online], Graduate School of Arts and Sciences, the University of Tokyo, [retrieved on March 18, 2010], internet <html://kouiki.c.u-tokyo.ac.jp/topics/2008/2008_g/2008_g.html>

### Summary of Invention

### Technical Problem

By the way, there are cases where a plurality of users such as "father", "mother", and "child" use a single display apparatus such as a television. Accordingly, even if various settings can be freely changed on a television side, the settings are not necessarily ones suited for each of the plurality of users.

Further, it is troublesome for each user to change the settings to his or her favorite settings every time he or she uses the display apparatus.

The inventions in Patent Literatures 4 through 6 do not consider saving a registered user the trouble of carrying out an input operation.

Further, the technique of Patent Literature 7 requires a plurality of users to make angle settings in advance by using a remote controller. This is troublesome. Further, the angle detection sensor utilizing infrared rays is provided on a front side of the display apparatus. However, in a television or the like in which a fluorescent tube is used as a backlight, there arises a problem that an incident angle of an infrared ray cannot be accurately judged due to interference of an infrared ray etc. emitted from the fluorescent tube side at the time of power activation, etc.

The present invention was attained to solve the above problems, and an object of the present invention is (i) to provide a display apparatus which allows setting to be easily changed to setting suited to a user who is using the display apparatus and (ii) to provide a display apparatus and a control apparatus for controlling a display apparatus each of which can save a user the trouble of causing the display apparatus to execute his or her favorite processing.

### Solution to Problem

In order to attain the above object, a display apparatus of the present invention which includes a display section for displaying an image and which is operated by an operation terminal, includes: executing means for executing an operation of the display apparatus; and a receiving section that receives a signal containing identification information for identifying a user who is using the operation terminal, the signal being sent from the operation terminal, the executing means (i) acquiring setting information corresponding to the identification information received by the receiving section from among a plurality of sets of associated information recorded on a recording section and (ii) executing the operation on a basis of the setting information thus acquired, each of the plurality of sets of associated information being information in which identification information and setting information used for execution of the operation by the executing means are associated with each other.

In order to attain the above object, a method of the present invention for controlling a display apparatus which includes a display section for displaying an image and which is operated by an operation terminal, includes the steps of: receiving a signal containing identification information for identifying a user who is using the operation terminal, the signal being sent from the operation terminal; and acquiring, by referring to a recording section in which a plurality of sets of associated information are recorded, setting information corresponding to the identification information thus received and executing an operation of the display apparatus on a basis of the setting information thus acquired, each of the plurality of sets of associated information being information in which identification information and setting information used for execution of the operation by executing means for executing the operation of the display apparatus are associated with each other.

According to the arrangement and method, in the display apparatus, when identification information for identifying a user who is using the operation terminal is received, setting information corresponding to the identification information thus received is acquired from associated information stored in the recording section, and an operation is executed on the basis of the setting information thus acquired.

The user who is operating the display apparatus with the use of the operation terminal can be regarded as a user who is using the display apparatus. According to the present invention, it is therefore possible to easily switch setting to setting suited to the user who is using the display apparatus and to execute an operation on the basis of the setting suited to the user.

In order to attain the above object, a control apparatus of the present invention which controls a display apparatus having a display section, includes: a user recognizing section that recognizes a user recorded in advance; a display control section that causes the display section to display a name of user-specific processing which is at least one processing associated in advance with the user recognized by the user recognizing section; and a processing executing section that (i) accepts an instruction from the user to execute at least one of the user-specific processing and (ii) executes processing indicated by the instruction.

In order to attain the above object, a method of the present invention for controlling a display apparatus having a display section, includes the steps of: (a) recognizing a user recorded in advance; (b) causing the display section to display a name of user-specific processing which is at least one processing associated in advance with the user recognized in the step (a); and (c) accepting an instruction from the user to execute at least one of the user-specific processing and executing processing indicated by the instruction.

According to the arrangement, when the user recognizing section recognizes a user recorded in advance, a name of user-specific processing associated in advance with the user thus recognized is displayed on the display section. This allows the user to confirm the name of the at least one user-specific processing displayed on the display section and to select at least one of the at least one user-specific processing. The processing executing section accepts information specifying the user-specific processing selected by the user, and executes the user-specific processing selected by the user.

Accordingly, in a case where user-specific processing is registered in advance, the user-specific processing can be executed in response to recognition of a user. Consequently, the user can cause the display apparatus to execute desired processing without carrying out any input operation. This eliminates the trouble for the user to carry out an input operation.

A television receiver of the present invention includes the display apparatus of the present invention.

Note that the display apparatus may be realized by a computer. In this case, the scope of the present invention encompasses a program for causing a computer to operate as each means of the display apparatus and a computer readable recording medium in which the program is stored.

### Advantageous Effects of Invention

As described above, the display apparatus of the present invention which includes a display section for displaying an image and which is operated by an operation terminal, includes: executing means for executing an operation of the display apparatus; and a receiving section that receives a signal containing identification information for identifying a user who is using the operation terminal, the signal being sent from the operation terminal, the executing means (i) acquiring setting information corresponding to the identification information received by the receiving section from among a plurality of sets of associated information recorded on a recording section and (ii) executing the operation on a basis of the setting information thus acquired, each of the plurality of sets of associated information being information in which identification information and setting information used for execution of the operation by the executing means are associated with each other. This allows setting to be easily switched to setting suited to a user who is using the display apparatus.

In order to attain the above object, a control apparatus of the present invention which controls a display apparatus having a display section, includes: a user recognizing section that recognizes a user recorded in advance; a display control section that causes the display section to display a name of user-specific processing which is at least one processing associated in advance with the user recognized by the user recognizing section; and a processing executing section that (i) accepts an instruction from the user to execute at least one of the user-specific processing and (ii) executes processing indicated by the instruction.

In order to attain the above object, a method of the present invention for controlling a display apparatus having a display section, includes the steps of: (a) recognizing a user recorded in advance; (b) causing the display section to display a name of user-specific processing which is at least one processing associated in advance with the user recognized in the step (a); and (c) accepting an instruction from the user to execute at least one of the user-specific processing and executing processing indicated by the instruction.

The control apparatus of the present invention therefore produces the following effect. Specifically, in a case where user-specific processing is registered in advance, the user-specific processing can be executed in response to recognition of a user. Consequently, the user can cause the display apparatus to execute desired processing without carrying out any input operation. This eliminates the trouble for the user to carry out an input operation.

### Brief Description of Drawings

Fig. 1

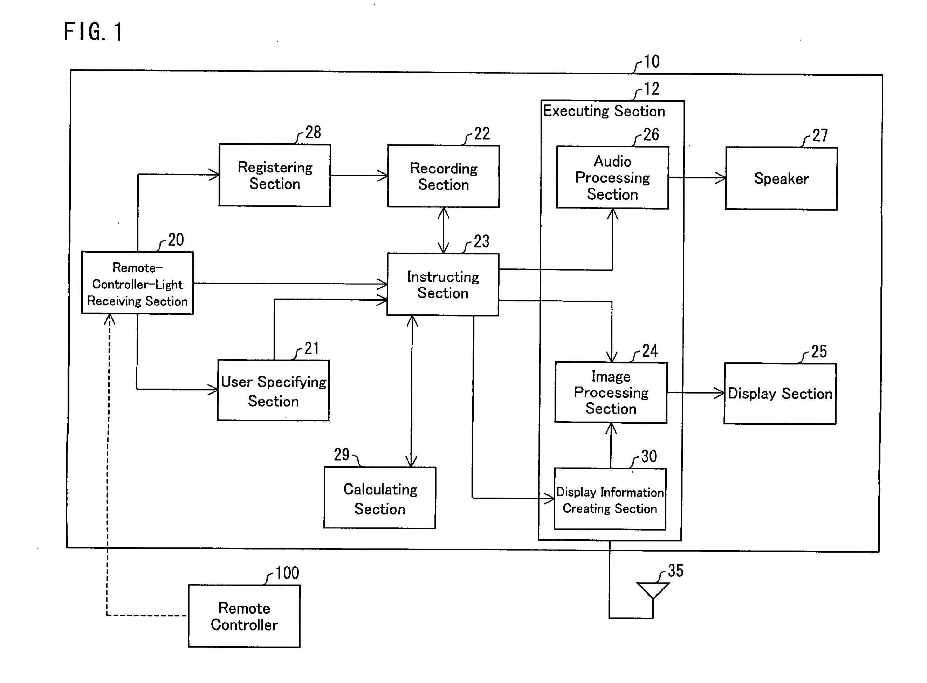

   Fig. 1 is a block diagram illustrating an outline configuration of a display apparatus of an embodiment of the present invention.
Fig. 2

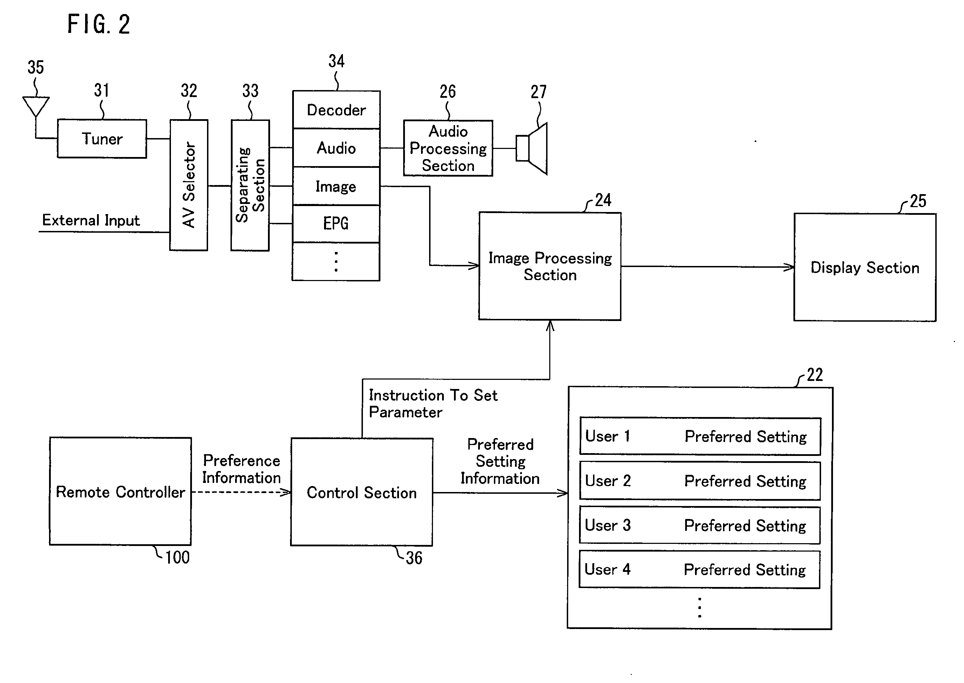

   Fig. 2 is a block diagram illustrating an overall configuration of the display apparatus illustrated in Fig. 1.
Fig. 3

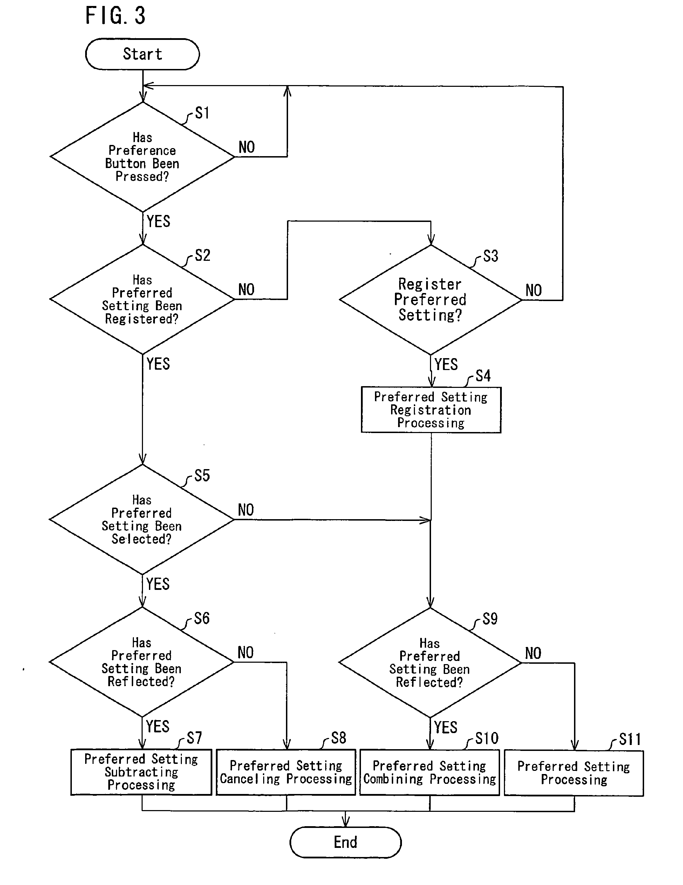

   Fig. 3 is a flow chart showing a flow of preferred setting processing in the display apparatus illustrated in Fig. 1.
Fig. 4

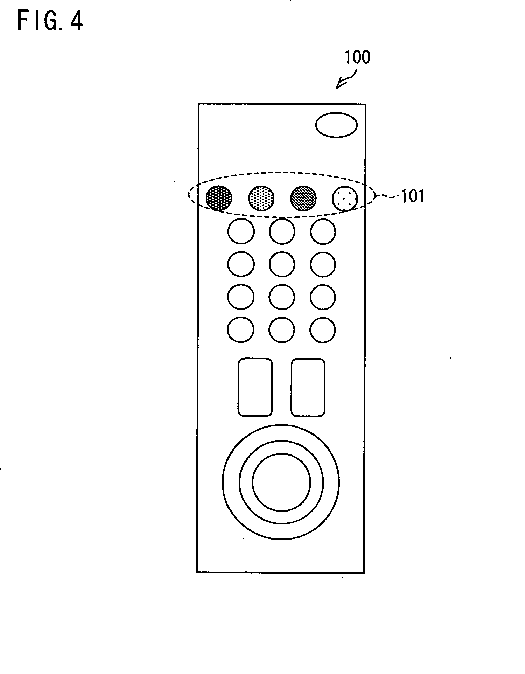

   Fig. 4 is a diagram illustrating an appearance of a remote controller for operating the display apparatus illustrated in Fig. 1.
Fig. 5

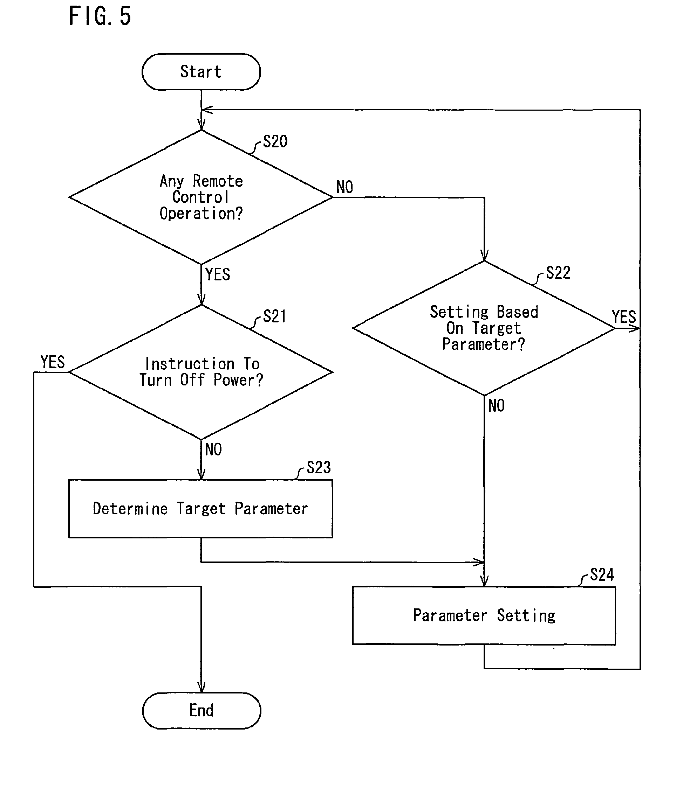

   Fig. 5 is a flow chart showing a flow of preferred setting registering processing carried out in a case where a plurality of users are using the display apparatus illustrated in Fig. 1.
Fig. 6

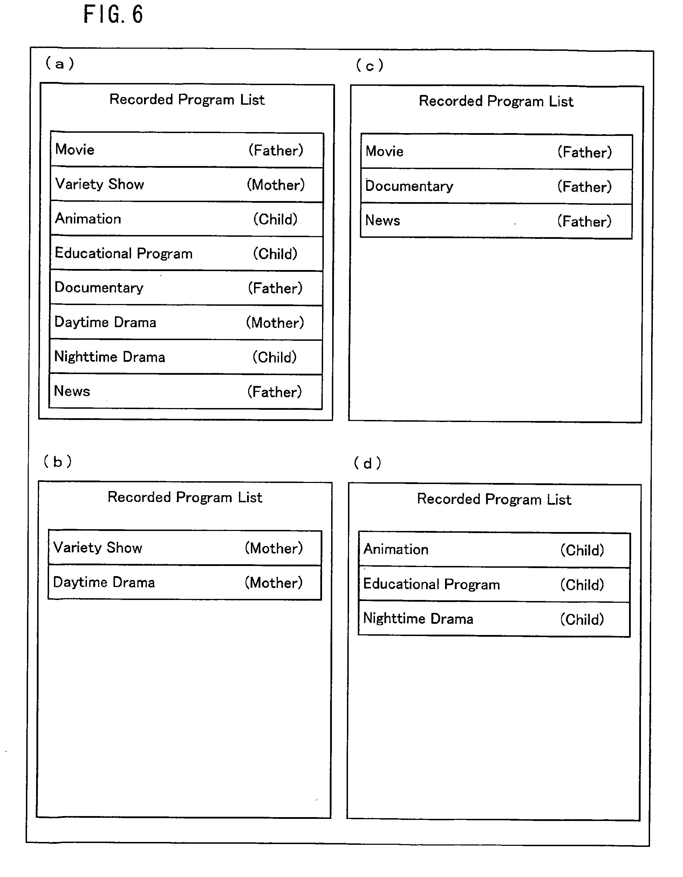

   Fig. 6 is a diagram explaining processing of creating a recorded program list on the basis of preferred setting in the display apparatus illustrated in Fig. 1.
Fig. 7

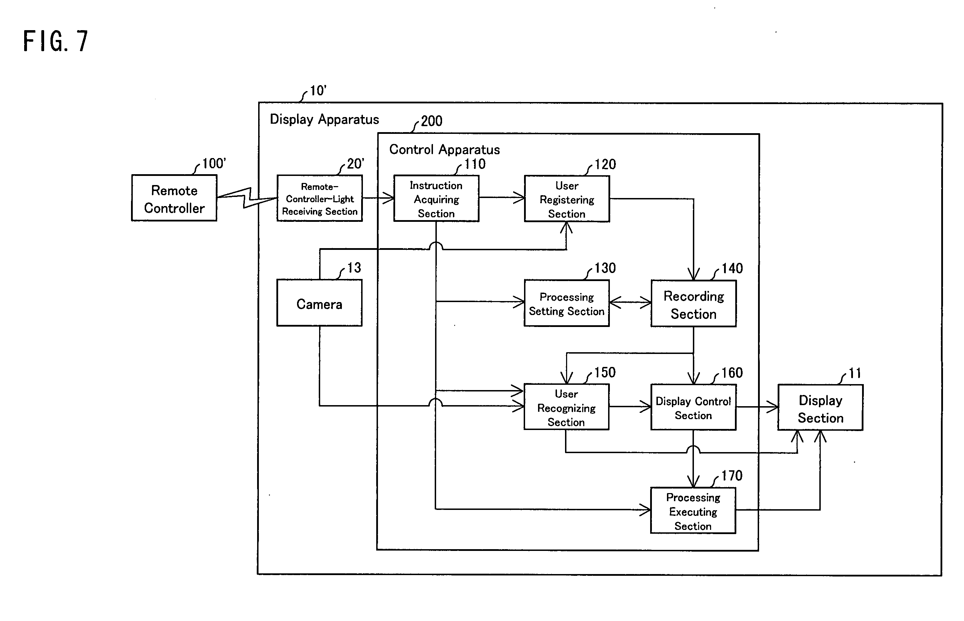

   Fig. 7 is a diagram illustrating a configuration of a display apparatus of another embodiment of the present invention and a configuration of a control apparatus for operating the display apparatus.
Fig. 8

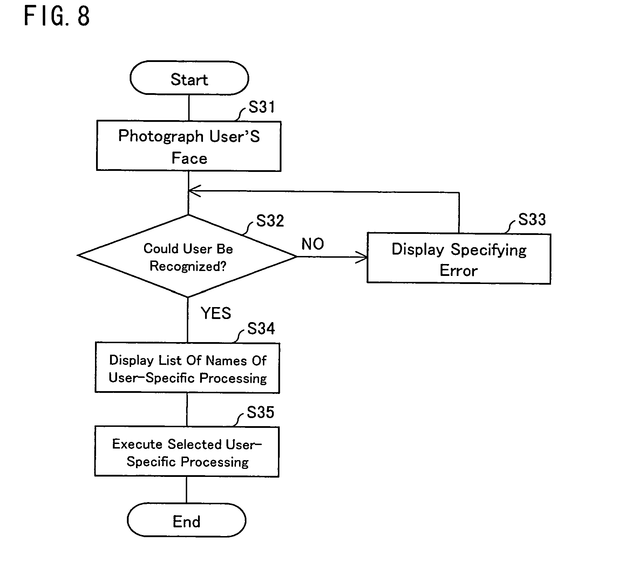

   Fig. 8 is a flow chart showing a flow of a series of steps, i.e., user recognizing step, displaying step, and processing executing step in the control apparatus.
Fig. 9

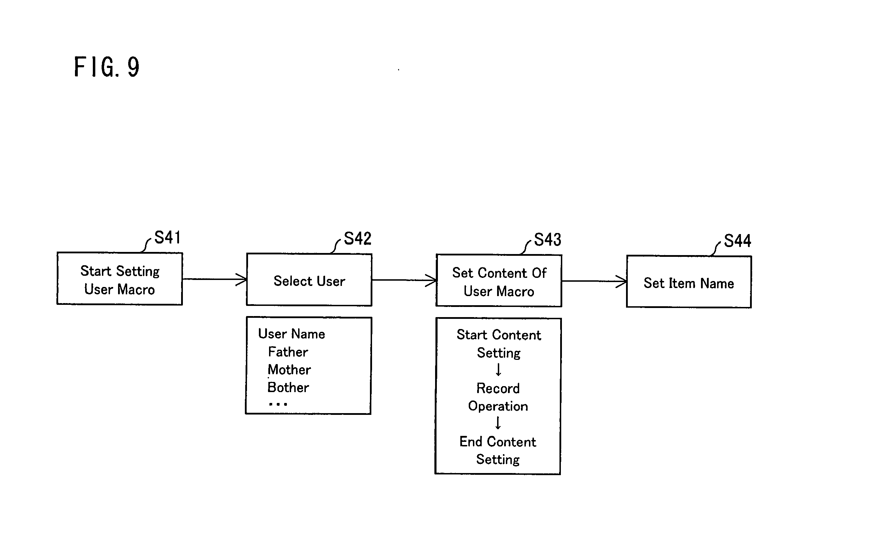

   Fig. 9 is a diagram showing a flow of a first example of setting of user-specific processing in the control apparatus.
Fig. 10

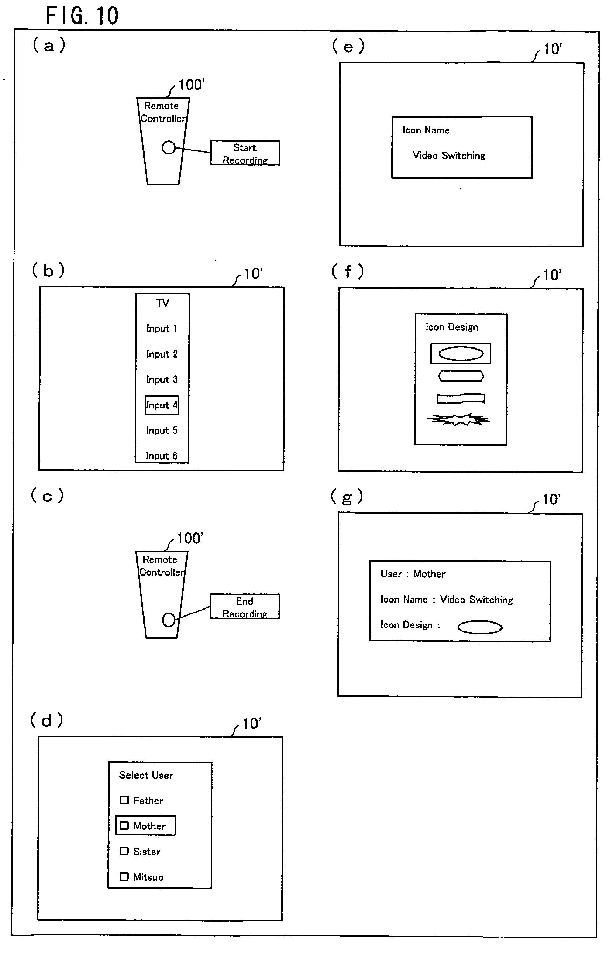

   Fig. 10 illustrates a flow of a first example of setting of user-specific processing in the control apparatus by using an exemplary configuration of the remote controller and an exemplary display screen of the display apparatus. (a) and (c) of Fig. 10 are diagrams each illustrating a configuration of the remote controller, and (b) and (d) through (g) of Fig. 10 are setting windows of the display apparatus.
Fig. 11

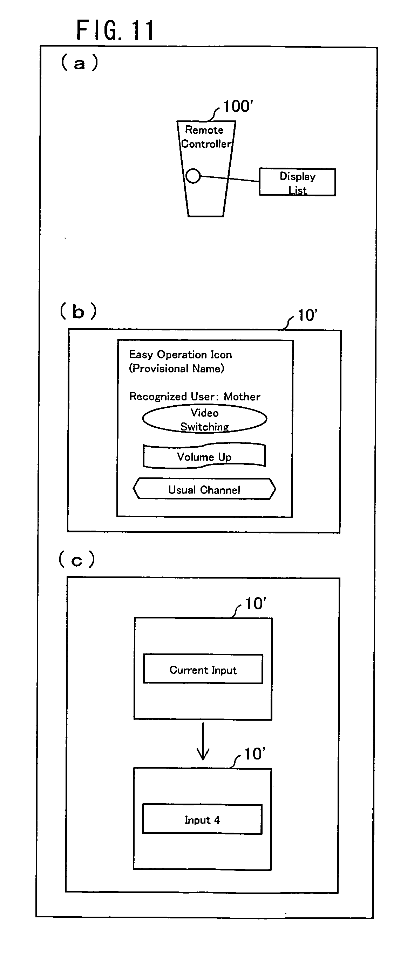

   Fig. 11 illustrates a flow of first example of execution of the user-specific processing in the control apparatus by using an exemplary configuration of the remote controller and an exemplary display screen of the display apparatus. (a) of Fig. 11 is a diagram illustrating a configuration of the remote controller, and (b) and (c) of Fig. 11 is an execution screen of the display apparatus.
Fig. 12

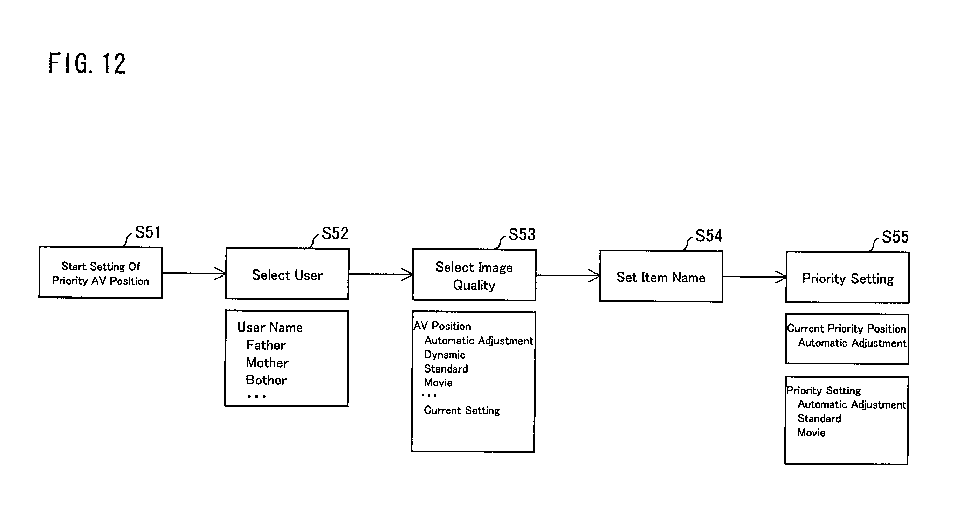

   Fig. 12 is a diagram illustrating a flow of a second example of setting of the user-specific processing in the control apparatus.
Fig. 13

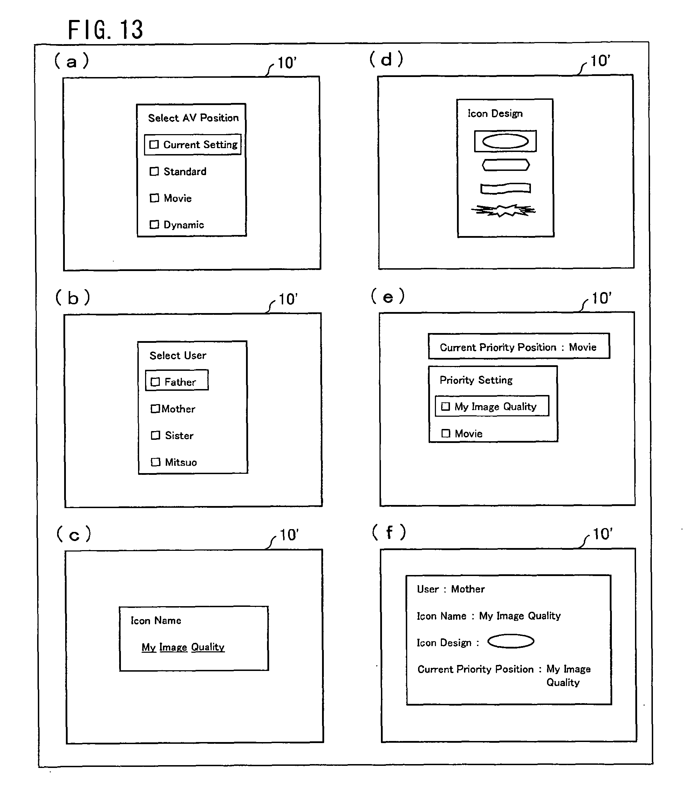

   Fig. 13 illustrates a flow of a second example of setting of the user-specific processing in the control apparatus by using an exemplary display screen of the display apparatus. (a) through (f) of Fig. 13 are setting windows of the display apparatus.
Fig. 14

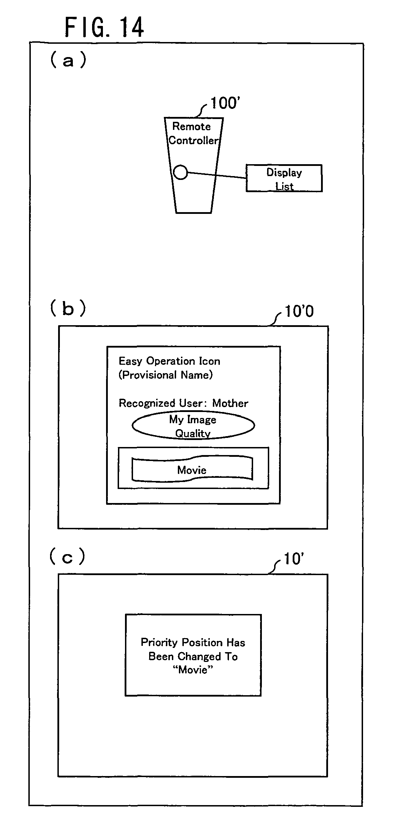

   Fig. 14 illustrates a flow of a second example of execution of the user-specific processing in the control apparatus by using an exemplary configuration of the remote controller and an exemplary display screen of the display apparatus. (a) of Fig. 14 is a diagram illustrating a configuration of the remote controller, and (b) and (c) of Fig. 14 are execution screen of the display apparatus.
Fig. 15

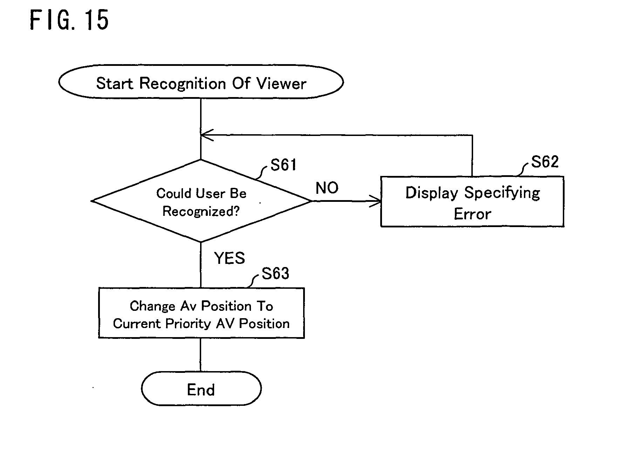

   Fig. 15 is a flow chart showing processing of automatically switching an image quality of an image that is being displayed on the display apparatus controlled by the control apparatus from current setting to an image quality of a current priority position set by a user.
Fig. 16

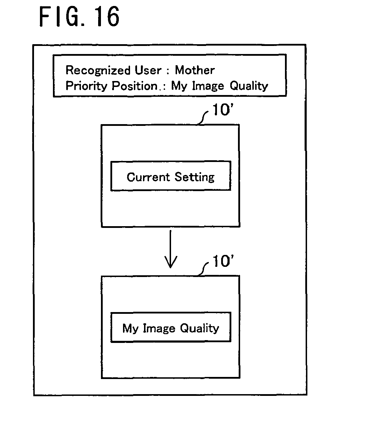

   Fig. 16 is a diagram showing that an AV position of the display apparatus controlled by the control apparatus has been changed from "current setting" to "movie".
Fig. 17

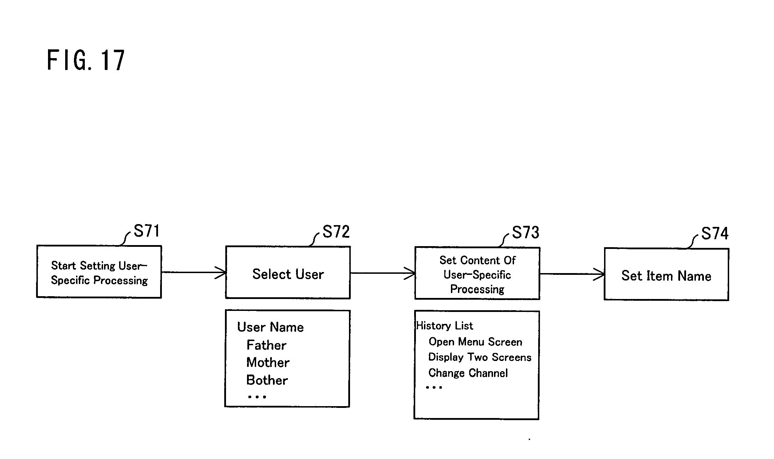

   Fig. 17 is a diagram illustrating a flow of a third example of setting of the user-specific processing in the control apparatus.
Fig. 18

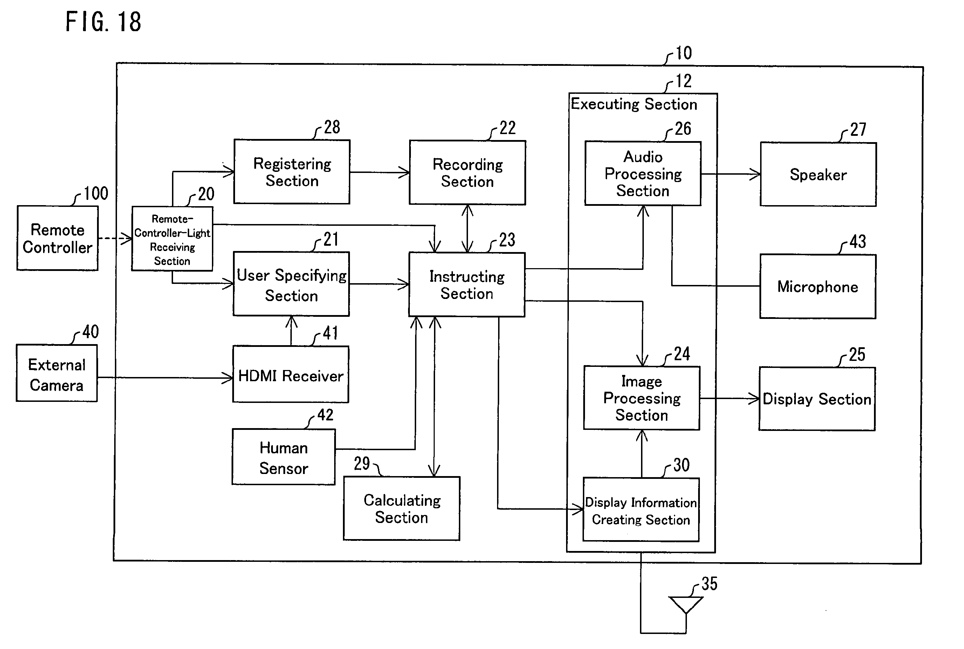

   Fig. 18 is a diagram illustrating a configuration of another embodiment of the display apparatus of the present invention.
Fig. 19

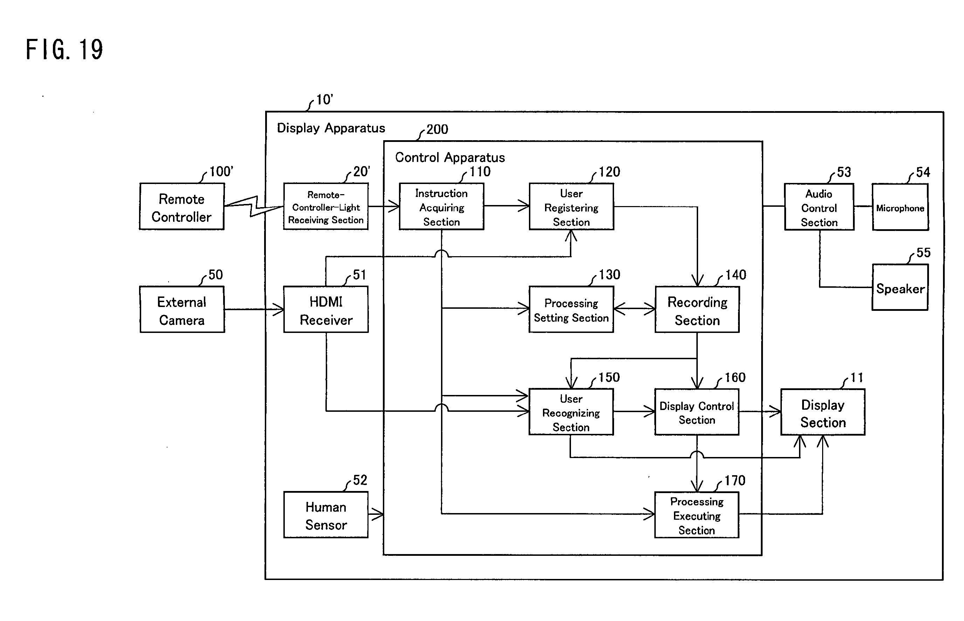

   Fig. 19 is a diagram illustrating a configuration of another embodiment of the display apparatus of the present invention.
Fig. 20

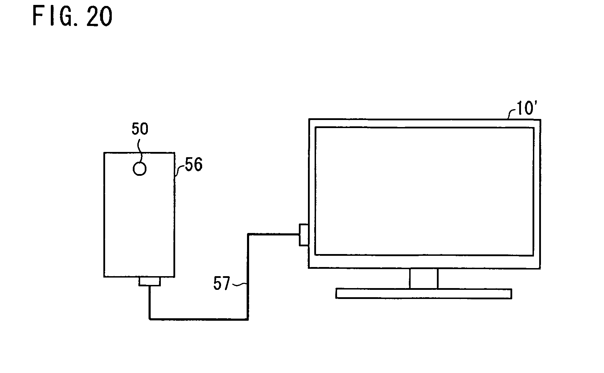

   Fig. 20 is a diagram illustrating a configuration of another embodiment of the display apparatus of the present invention.

### Description of Embodiments

### <First Embodiment>

First Embodiment of a display apparatus of the present invention is described below with reference to Figs. 1 through 6. Note that, in the description below, various limitations preferable for carrying out the present invention are given, but the technical scope of the present invention is not limited to the descriptions in the following embodiments and drawings.

### [Configuration of Display Apparatus 10]

First, a configuration of a display apparatus 10 of First Embodiment is described below with reference to Fig. 1. Fig. 1 is a block diagram illustrating an outline configuration of the display apparatus 10 of the embodiment of the present invention.

As illustrated in Fig. 1, the display apparatus 10 includes an executing section 12 (executing means), a remote-controller-light receiving section 20 (receiving section), a user specifying section 21, a recording section 22, an instructing section 23, a display section 25, a speaker 27 (audio output section), a registering section 28 (registering means), and a calculating section 29. The executing section 12 includes an image processing section 24 (image quality adjusting means), an audio processing section 26 (sound quality adjusting means), and a display information creating section 30 (program guide creating means, recorded program guide creating means).

The display apparatus 10 is configured to be capable of receiving a remote controller signal supplied from a remote controller 100 (operation terminal). That is, the display apparatus 10 accepts an operation instruction from a user via the remote controller 100. Further, the display apparatus 10 receives a broadcast wave via an antenna 35 and acquires a program and program information by decoding the broadcast wave thus received.

The executing section 12 executes various kinds of operations of the display apparatus 10 in accordance with an instruction from the instructing section 23.

The remote-controller-light receiving section 20 receives a control signal supplied from the remote controller 100. This control signal may be instruction information given by a user or may be identification information for identifying a user using the remote controller 100. Alternatively, the control signal may be a signal including both of the instruction information and the identification information.

The identification information is information for identifying a user who is currently using the display apparatus 10. The identification information is information that is associated with a user of the display apparatus 10 on the display apparatus 10 side, unlike a remote controller code for designating an operation of the display apparatus 10. That is, a plurality of different sets of identification information are stored in advance in the remote controller 100, and when a user uses the remote controller 100, a signal containing identification information which varies depending on the user is sent from the remote controller 100. The remote-controller-light receiving section 20 sends the control signal thus received to the user specifying section 21.

The user specifying section 21 analyses the control signal received by the remote-controller-light receiving section 20 so as to determine whether or not the control signal contains identification information. In a case where it is determined that the control signal received by the remote-controller-light receiving section 20 contains identification information, the user specifying section 21 checks whether or not the identification information is stored in the recording section 22, and sends a result of the checking to the instructing section 23.

The recording section 22 records various kinds of data and programs. Examples of the recording section 22 include (i) a ROM (Read Only Memory) which is a read-only semiconductor memory in which fixed data such as a program that is necessary for the control section 36 (later described) to control an operation is stored and (ii) a RAM (Random Access Memory) which is a so-called working memory in which data used for computation and data of a result of computation are temporarily stored.

Further, the recording section 22 records a plurality of sets of associated information in each of which identification information is associated with setting information which the executing section 12 uses in executing an operation. Examples of the setting information include, but are not limited to, a setting value for adjusting an image quality of an image, a setting value for adjusting a sound quality of audio, and settings of coloring of a menu screen or colors of buttons. In the present embodiment, the setting information is stored in the recording section 22 provided in the display apparatus. However, the present invention is not limited to this. The setting information may be stored in an external recording device.

The instructing section 23 instructs the executing section 12 to execute an operation on the basis of the setting information acquired from the recording section 22. Further, in a case where the remote-controller-light receiving section 20 receives a plurality of different sets of identification information within a predetermined period of time, the instructing section 23 instructs the calculating section 29 to determine which setting information should be used when the executing section 12 executes an operation.

The image processing section 24 carries out predetermined processing with respect to a video signal contained in contents such as contents of digital broadcasting and analog broadcasting, contents recorded on DVD, BD, HDD, and the like, or contents acquired via a network, and then supplies the video signal to the display section 25. Specifically, the image processing section 24 carries out image quality adjusting processing by (i) adjusting an image quality of an image and (ii) causing the display section 25 to display the image thus adjusted.

In the present embodiment, the image processing section 24 acquires, from the recording section 22, a setting value corresponding to the identification information received by the remote-controller-light receiving section 20, and adjusts an image quality on the basis of the setting value thus acquired. Examples of items of an image quality to be adjusted include, but are not limited to, "luminance level", "color (color density)", "black level", "tint (hue)", and "luminance of backlight". Note that the image processing section 24 supplies, to the display section 25, not only the aforementioned contents but also data such as (i) data concerning program information such as EPG (Electronic Program Guide) data and (ii) image data for OSD (On Screen Display) necessary for OSD.

The display section 25 displays an image on the basis of the video signal supplied from the image processing section 24. The display section 25 may be configured to include a display element included in a liquid crystal display, a plasma display, an organic EL display, or the like and a driver circuit for driving the display element on the basis of a received video signal.

The audio processing section 26 carries out predetermined processing with respect to an audio signal contained in contents such as contents of digital broadcasting and analog broadcasting, contents recorded on DVD, BD, HDD, and the like, or contents acquired via a network, and then supplies the audio signal to the speaker 27. Specifically, the audio processing section 26 carries out sound quality adjusting processing by (i) adjusting a sound quality of audio and (ii) supplying the audio thus adjusted to the speaker 27.

In the present embodiment, the audio processing section 26 acquires, from the recording section 22, a setting value corresponding to the identification information received by the remote-controller-light receiving section 20, and adjusts a sound quality on the basis of the setting value thus acquired.

The registering section 28 (i) determines, on the basis of an instruction from a user supplied via the remote-controller-light receiving section 20, setting information which the executing section 12 uses in executing an operation and (ii) records, in the recording section 22, the setting information thus determined in such a manner that the setting information is associated with the identification information. For example, the registering section 28 (i) determines, on the basis of an instruction from a user, setting values such as a setting value used for adjustment of an image quality by the image processing section 24 and a setting value used for adjustment of a sound quality by the audio processing section 26 and (ii) records, in the recording section 22, the setting values thus determined in such a manner that the setting values are associated with the identification information.

The calculating section 29 determines which setting information should be used for execution of an operation by the executing section 12, on the basis of a plurality of sets of identification information and a plurality of sets of setting information that are supplied from the instructing section 23. The calculating section 29 notifies the instructing section 23 of the setting information thus determined.

Specifically, the calculating section 29 determines which setting information should be used for execution of an operation by the executing section 12, on the basis of (i) a ratio at which a plurality of sets of identification information are received by the remote-controller-light receiving section 20 within a predetermined period of time and (ii) a plurality of sets of setting information that correspond to the respective plurality of sets of identification information thus received. For example, in a case where a setting value for adjusting an image quality of an image is determined, the calculating section 29 determines, as a setting value that should be adjusted by the image processing section 24, a setting value corresponding to identification information that is frequently received. Alternatively, the calculating section 29 may calculate a setting value on the basis of a plurality of setting values corresponding to a plurality of sets of identification information that are received at a similar frequency.

The display information creating section 30 creates an electronic program guide on the basis of EPG data that is regularly updated and stored, and displays an image based on OSD data that is stored in advance in the recording section 22. The OSD data is data for displaying various kinds of information such as a setting menu screen, a sound volume gauge, a current time, and a selected channel. Further, the display information creating section 30 creates a program guide or a recorded program list. The display information creating section 30 may carry out programmed recording processing with the use of the electronic program guide thus created.

As illustrated in Fig. 2, the display apparatus 10 may further include a control section 36, an antenna 35, a tuner 31, an AV selector 32, a separating section 33, a decoder 34, etc. Fig. 2 is a block diagram illustrating an overall configuration of the display apparatus 10.

In the display apparatus 10, the tuner 31 selects a broadcasting signal received via the antenna 35, and supplies the broadcasting signal to the AV selector 32. The AV selector 32 sends the broadcasting signal thus received to the separating section 33, and the separating section 33 separates the broadcasting signal supplied from the AV selector 32 into image data and audio data. The separating section 33 sends the image data and audio data to the decoder 34. The decoder 34 decodes the image data separated by the separating section 33, and captures, as a still image, video information included in the image data.

That is, the display apparatus 10 can be one that functions as a television receiver. Specifically, the display apparatus 10 may be configured to receive a broadcasting signal such as analog broadcasting, digital broadcasting, or IP broadcasting via the antenna 35 and cause the display section 25 to display contents included in the broadcasting signal thus received. Note that the broadcasting signal may contain program information. Further, the display apparatus 10 is not only capable of acquiring contents from an external apparatus (not illustrated), but also capable of acquiring contents or program information from the Internet or the like.

The control section 36 collectively controls the sections of the display apparatus 10. Functions of the control section 36 are accomplished, for example, by executing, by use of a CPU (Central Processing Unit), a program stored in a recording device such as a RAM or a flash memory.

### [Operation of Display Apparatus 10]

Next, the following describes an operation concerning a user's preferred setting function in the display apparatus 10, with reference to Figs. 3 through 6. Fig. 3 is a flow chart showing a flow of the preferred setting processing in the display apparatus 10.

### (User's Preferred Setting)

Explained first is preferred setting processing of changing, in response to receipt of identification information from the remote controller 100, setting to one corresponding to the identification information thus received. Note that the following description deals with an example in which a setting value for adjusting an image quality is changed.

In the present embodiment, the remote controller 100 is not limited to a specific configuration, provided that it can send a signal including identification information for identifying a user who is using the remote controller 100 in addition to an instruction from the user.

For example, as illustrated in Fig. 4, the remote controller 100 has a plurality of buttons 101 (hereinafter referred to also as "preference buttons"). When a user presses any of the preference buttons 101, a signal including identification information is sent. Fig. 4 is a diagram illustrating an appearance of the remote controller 100 for operating the display apparatus 10.

The preference buttons 101 are buttons to each of which identification information is allocated in advance. In the remote controller 100 illustrated in Fig. 4, different sets of identification information are allocated to the respective plurality of preference buttons 101. As described above, in the recording section 22 of the display apparatus 10, a plurality of sets of associated information in each of which identification information and setting information are associated with each other are stored. When a user presses any of the preference buttons 101, the executing section 12 executes an operation on the basis of setting information corresponding to identification information allocated to the preference button 101 thus pressed. The user can freely determine this setting information corresponding to identification information by sending an instruction to the registering section 28.

As has been described, different sets of information for a change of setting are allocated to the respective preference buttons 101 provided on the remote controller 100, instead of a common set of information which triggers a change of setting. That is, setting is changed to one which varies depending on which of the preference buttons 101 has been pressed. Accordingly, in a case where a user determines his or her own preference button 101 in advance, setting in the display apparatus 10 can be instantaneously changed by pressing such a user's own preference button 101.

Further, in a case where the display apparatus 10 recognizes identification information for the first time at the start of use of the display apparatus 10 (i.e., a case where a preference button 101 is pressed for the first time), various settings can be registered by allowing a user to select whether or not the identification information thus recognized should be recorded on the recording section 22.

In the present embodiment, the plurality of preference buttons 101 are provided on the remote controller 100, and different sets of identification information are allocated to the respective plurality of preference buttons 101. However, the present invention is not limited to this. For example, it is possible to employ an arrangement in which (i) a plurality of remote controllers each of which has a single preference button are prepared and (ii) different sets of identification information are allocated to the preference buttons of the respective plurality of remote controllers. Further, it is also possible to employ an arrangement in which (i) a mechanism that is capable of recognizing a user's fingerprint (e.g., fingerprint sensor) is provided in a remote controller and (ii) a fingerprint of each user and identification information are stored in the remote controller in such a manner that they are associated with each other.

With the arrangement, the fingerprint sensor identifies a fingerprint every time a user touches the remote controller, and identification information corresponding to the fingerprint thus identified can be sent from the remote controller. Further, it is also possible to employ an arrangement in which (i) a single preference button is provided on a remote controller and (ii) target identification information is sent by toggle-switching of the preference button.

As shown in Fig. 3, when the remote-controller-light receiving section 20 receives a signal from the remote controller 100, the user specifying section 21 determines whether or not any of the preference buttons of the remote controller 100 has been pressed, i.e., whether or not the signal thus received includes identification information (step S1).

In a case where it is determined in step S1 that any of the preference buttons 101 has been pressed ("YES" in step S1), the user specifying section 21 determines whether or not the identification information thus received is contained in the associated information stored in the recording section 22. In a case where the user specifying section 21 determines that the identification information thus received is contained in the associated information stored in the recording section 22, the user specifying section 21 determines whether or not a setting value for an image quality that is associated with this identification information is recorded in the display apparatus 10. That is, the user specifying section 21 determines whether or not user's setting information on setting of an image quality has been already registered (step S2).

The "preferred setting" is a function of executing an operation on the basis of setting information determined for each user. That is, the user specifying section 21 identifies, on the basis of identification information, a user who is using the display apparatus 10, and then the executing section 12 executes an operation on the basis of setting information that is determined in advance by the user thus identified. In the present embodiment, setting information determined by a user may be referred to also as "preferred setting".

In a case where the preferred setting (i.e., setting information for the user thus identified) has not been registered yet ("NO" in step S2), a screen inquiring the user of whether to register preferred setting or not is displayed on the display section 25 (step S3). In a case where an instruction to register the preferred setting is received from the user in response to this inquiry, user's registration of the preferred setting is accepted.

The following describes an example of processing of accepting user's registration of the preferred setting. A method of determining a setting value for an image quality is not limited in particular, and can be, for example, a method in which (i) a plurality of sample images adjusted to various image qualities are prepared in advance, (ii) the plurality of sample images are displayed on the display section 25, and (iii) a setting value of a desired sample image selected by a user is determined as a setting value for preferred setting.

For example, a plurality of sample images are prepared by adjusting a single image in different ways in terms of image qualities such as "luminance level", "color (color density)", "black level", "tint (hue)", and "luminance of backlight", and a user is prompted to select his or her favorite image quality. The image quality thus selected is regarded as a setting value for the preferred setting. Note that items for an image quality to be adjusted are not limited to these.

In a case where the display apparatus 10 includes specifying means (not illustrated) for specifying a genre of an image, a setting value for an image quality can be changed depending on the genre. For example, it is possible that (i) a plurality of sample images prepared in a similar manner to that mentioned above are displayed on a genre basis and (ii) a setting value for an image quality is determined so that it differs depending on the genre.

Examples of the genre include "film", "video", and "sport". The "film" is a genre of a film-derived content obtained by carrying out 3:2 pull-down processing with respect to a content filmed at 24 Hz. The "video" is genre of a content derived from 60 Hz normal broadcasting. The "sport" is associated with genre information of sport by the EPG data. Note that the genre is not limited to these three types, and can include a variety of genres such as "news", "information/tabloid show", "variety show", and "movie".

When the preferred setting is determined by an instruction from the user, the registering section 28 causes associated information in which the preferred setting and identification information are associated with each other to be recorded on the recording section 22 (step S4). At this time, a user name can be registered by an instruction from the user. The user name is, for example, "father", "mother", and "child", but is not limited in particular. The user can register any user name. The registering section 28 records, on the recording section 22, the user name thus inputted in such a manner that it is associated with the associated information.

Next, in a case where preferred setting that has been already registered is selected, i.e., in a case where the instructing section 23 instructs the image processing section 24 to reflect preferred setting corresponding to newly received identification information ("YES" in step S5), it is determined whether or not the image processing section 24 is executing an operation reflecting preferred setting corresponding another identification information (step S6).

In a case where the preferred setting corresponding to the another identification information is reflected ("YES" in step S6), preferred setting subtracting processing is carried out (step S7). Specifically, the instructing section 23 instructs the image processing section 24 to cancel the preferred setting corresponding to the another identification information. As a result, only the preferred setting corresponding to the newly received identification information is reflected in the image quality of the image adjusted by the image processing section 24. Meanwhile, in a case where the preferred setting corresponding to the another identification information is not reflected ("NO" in step S6), preferred setting canceling processing is carried out (step S8). Specifically, since only the preferred setting corresponding to the newly received identification information is already reflected in image quality adjusted by the image processing section 24, an instruction for the image processing section 24 to reflect the preferred setting is canceled.

Meanwhile, also in a case where the preferred setting that has been already registered is not selected, i.e., in a case where the instructing section 23 does not instruct the image processing section 24 to reflect the preferred setting corresponding to the newly received identification information ("NO" in step S5), it is determined whether or not preferred setting corresponding to another identification information is reflected in the image quality of the image adjusted by the image processing section 24 (step S9).

In a case where the preferred setting corresponding to the another identification information is reflected ("YES" in step S9), preferred setting combining processing is carried out (step S10). Specifically, the instructing section 23 instructs the image processing section 24 to reflect a setting value combining (i) the preferred setting corresponding to the another identification information and (ii) the preferred setting corresponding to the newly received identification information. As a result, the setting value combining (i) the preferred setting corresponding to the another identification information and (ii) the preferred setting corresponding to the newly received identification information is reflected in the image quality of the image adjusted by the image processing section 24. Meanwhile, in a case where the preferred setting corresponding to the another identification information is not reflected ("NO" in step S9), the instructing section 23 instructs the image processing section 24 to reflect the preferred setting corresponding to the newly received identification information (step S11).

As described above, in the display apparatus 10, when identification information for identifying a user who is using the remote controller 100 is received, setting information corresponding to the identification information thus received is acquired from the recording section 22, and an operation is executed on the basis of the setting information thus acquired.

For example, the image processing section 24 adjust an image quality on the basis of a setting value for adjustment of an image quality which setting value corresponds to the identification information received by the remote-controller-light receiving section 20. This makes it possible to display an image that is adjusted to an image quality suited to a user who is sending an operation instruction to the display apparatus 10. Further, the audio processing section 26 adjusts a sound quality on the basis of a setting value for adjustment of a sound quality which setting value corresponds to the identification information received by the remote-controller-light receiving section 20. This makes it possible to output audio that is adjusted to a sound quality suited to the user who is sending an operation instruction to the display apparatus 10.

Further, as shown in step S4, a user can set a desired setting value by which the executing section 12 executes an operation. Accordingly, in a case where a setting value corresponding to identification information received by the remote-controller-light receiving section 20 is a desired setting value set by a user, the image processing section 24 can adjust an image quality to one suited to user's preference, for example. Note that a method of sending identification information from the remote controller 100 is not limited to those described above.

The above description has dealt with a case where the display apparatus 10 is operated in response to an operation instruction sent from the remote controller 100. However, an operation terminal in the present invention is not limited to a remote controller, and can be, for example, a mobile phone.

For example, the display apparatus of the present invention may be controlled in accordance with an operation instruction from a mobile phone having a remote control code for controlling the display apparatus of the present invention, in a similar manner to the case of a remote controller. In this case, a user who is using a display apparatus can be identified by (i) using, for example, a mobile phone number as identification information for identifying the user and (ii) sending a remote control code including the identification information to the display apparatus.

Further, for example, in a case where a camera-equipped mobile phone that has a remote control code is used as the operation terminal, it is possible to (i) photograph a user with the use of the camera and (ii) to record, in the mobile phone, the user thus photographed in such a manner that the user is associated with identification information in advance. With the arrangement, an operation can be executed in the display apparatus on the basis of setting corresponding to the user by sending, when controlling the display apparatus, a remote control code including the identification information to the display apparatus.

### (Use by a Plurality of Users)

Next, the following describes a flow of preferred setting processing carried out in a case where a plurality of users are using the display apparatus 10. Fig. 5 is a flow chart showing a flow of preferred setting registration processing carried out in a case where a plurality of users are using the display apparatus 10.

The flow chart of Fig. 5 shows preferred setting processing carried out in a case where (i) the remote-controller-light receiving section 20 receives a plurality of different sets of identification information within a predetermined period of time and (ii) the user specifying section 21 specifies a plurality of users on the basis of the plurality of different sets of identification information thus received. Note that the predetermined period of time is not limited in particular, and can be a predetermined any period of time (e.g., 1 minute).

After the user specifying section 21 specifies the plurality of users within a predetermined period, the control section 36 determines whether or not a remote control operation is being carried out by any of the users, on the basis of whether or not the remote-controller-light receiving section 20 receives instruction information after the receipt of the identification information (step S20).

In a case where it is determined that the instruction information is received from the remote controller 100 ("YES" in step S20), it is determined whether or not the instruction information thus received is an instruction to "turn off power" (step S21). In a case where any one of the plurality of users has sent the instruction to "turn off power" ("YES" in step S21), the preferred setting processing is finished at this moment.

Meanwhile, in a case where the received instruction information is not the instruction to "turn off power" ("NO" in step S21), setting information used for execution of an operation indicated by the received instruction information is determined. Here, a target parameter which is setting information used for actual operation of the executing section 12 is determined on the basis of a plurality of sets of setting information corresponding to the plurality of users specified by the user specifying section 21 (step S23). The target parameter is determined, for example, on the basis of priority levels, majority decision, an average value, or the like.

In a case where the target parameter is determined on the basis of priority levels, (i) priority levels are recorded in advance on the recording section 22 in such a manner that they are associated with respective sets of identification information and (ii) the target parameter is determined on the basis of the priority levels. Specifically, in a case where the user specifying section 21 specifies a plurality of users within a predetermined period of time, the instructing section 23 acquires, by referring to the associated information stored in the recording section 22, setting information that corresponds to a user of the highest priority level among the plurality of users thus specified.

For example, in a case where the user specifying section 21 specifies "father", "mother", and "child" as users using the display apparatus 10 and where a priority level of identification information of "father" is set to highest among the plurality of sets of identification information contained in advance in the plurality of sets of associated information stored in the recording section 22, the instructing section 23 acquires setting information corresponding to "father" and instructs the executing section 12 to execute an operation on the basis of this setting information. This makes it possible (i) to speedily select setting information on the basis of priority levels associated with respective sets of identification information and (ii) to execute an operation on the basis of the setting information thus selected even if a plurality of users are using the display apparatus 10.

In a case where the target parameter is determined on the basis of majority decision, setting information whose percentage is largest among the plurality of sets of setting information that correspond to the plurality of users using the display apparatus 10 is determined as the target parameter. Specifically, in a case where the user specifying section 21 specifies a plurality of users within a predetermined period of time, the instructing section 23 (i) acquires a plurality of sets of setting information that correspond to the plurality of users specified by the user specifying section 21 and (ii) instructs the executing section 12 to execute an operation on the basis of setting information whose percentage is largest among the plurality of sets of setting information thus acquired.

For example, a setting value for "color", which is one of the items for an image quality to be adjusted, is determined as follows. In a case where a setting value for "father" is "+ 10", a setting value for "mother" is "+5", and a setting value for "child" is "+ 10", the setting value "+ 10" is largest in percentage. Accordingly, the instructing section 23 instructs the image processing section 24 to adjust "color" on the basis of the setting value "+10". This makes it possible to execute an operation on the basis of setting popular to users even in a case where a plurality of users are using the display apparatus 10.

In a case where the target parameter is determined on the basis of an average value, an average value of a plurality of setting values that correspond to a plurality of users using the display apparatus 10 is determined as the target parameter. Specifically, in a case where the user specifying section 21 specifies a plurality of users within a predetermined period of time, the instructing section 23 (i) acquires a plurality of setting values that correspond to the plurality of users specified by the user specifying section 21 and (ii) instructs the executing section 12 to execute an operation on the basis of an average value of the plurality of setting values thus acquired.

For example, a setting value for "color", which is one of the items for an image quality to be adjusted, is determined as follows. In a case where a setting value for "father" is "+10", a setting value for "mother" is "+5", and a setting value for "child" is "+10", an average value of these setting values is "+8". Accordingly, the instructing section 23 instructs the image processing section 24 to adjust "color" on the basis of the setting value "+8". This makes it possible to execute an operation reflecting a plurality of setting values suited to respective users even if a plurality of users are using the display apparatus 10.

Alternatively, in the present embodiment, the target parameter can be determined on the basis of a ratio at which a plurality of sets of identification information are received within a predetermined period of time. In this case, the target parameter is determined by the calculating section 29.

In a case where a plurality of different sets of identification information are received within any period of time (first predetermined period of time), the calculating section 29 determines the target parameter on the basis of (i) a ratio at which the plurality of different sets of identification information are received within a certain period of time (second predetermined period of time) and (ii) a plurality of sets of setting information that correspond to the plurality of different sets of identification information thus received. Note that the first predetermined period of time and the second predetermined period of time may be different from each other as above or may be identical to each other.

For example, in a case where a plurality of sets of identification information corresponding to "father", "mother", and "child" are received within 30 seconds (any period of time), the calculating section 29 specifies a ratio at which the plurality of sets of identification information corresponding to the respective users are received within 10 minutes (certain period of time) before this moment. In this case, it is only necessary that record of reception of identification information received in the past be stored in the recording section 22. The calculating section 29 determines the target parameter by weighting a plurality of sets of setting information that correspond to the users on the basis of the ratio thus specified.

It is assumed here that identification information was received 100 times within 10 minutes. In a case where percentage of receipt of the identification information of "father" is 90%, percentage of receipt of the identification information of "mother" is 7%, and percentage of receipt of the identification information of "child" is 3%, the setting information for "father" can be determined as the target parameter by giving weight to "father" whose percentage of receipt of the identification information is highest.

In another example in which percentage of receipt of the identification information of "father" is 55%, percentage of receipt of the identification information of "mother" is 45%, and percentage of receipt of the identification information of "child" is 0%, the target parameter can be determined by combining the setting information for "father" and the setting information for "mother".

Further, the calculating section 29 may determine the target parameter not only by weighting based on the ratio at which a plurality of sets of identification information are received within a certain period of time, but also by giving weight to recently received identification information.

For example, in a case where percentage of receipt of the identification information of "father" is 90%, percentage of receipt of the identification information of "mother" is 7%, and percentage of receipt of the identification information of "child" is 3% and where the past 10 records within a certain period of time are identification information of "mother", the target parameter is determined by combining the setting information for "father" whose percentage of receipt of the identification information is highest and the setting information for "mother" even if the percentage of receipt of the identification information of "mother" is low.

Further, for example, in a case where percentage of receipt of the identification information of "father" is 55%, percentage of receipt of the identification information of "mother" is 45%, and percentage of receipt of the identification information of "child" is 0% and where the past 10 records within a certain period of time are identification information of "mother", the setting information for "mother" is given priority and is determined as the target parameter.

It is thus possible to easily change setting in view of not only a ratio of receipt of identification information, but also a user who is most likely to be using the display apparatus 10.

In a case where it is determined in step S20 described above that the control signal is not received from the remote controller 100, it is determined whether or not an operation that is currently being executed is based on setting corresponding to the target parameter (step S22).

In a case where the operation that is currently being executed is not based on the target parameter ("NO" in step S22), the instructing section 23 instructs the executing section 12 to execute an operation based on the setting corresponding to the target parameter (step S24). In this case, the target parameter can be determined by any of the methods described in step S23. Consequently, it is possible to execute an operation reflecting a plurality of sets of setting information for the plurality of users.

By the way, although setting used for execution of an operation by the executing section 12 may be instantaneously changed, it is preferable that the setting is gradually changed. For example, it is possible to employ an arrangement in which (i) a shift amount of a parameter per unit time is determined in advance and (ii) the executing section 12 executes an operation so that the parameter is changed by the shift amount every unit time in response to a changing instruction from the instructing section 23.

For example, in a case where the target parameter determined by any of the above methods is "100", a parameter (setting value) for an operation that is being executed is "50", and a shift amount per unit time is "5", the executing section 12 first changes the parameter by "+5" in response to receipt of a changing instruction from the instructing section 23 so that the parameter becomes "55". The parameter is gradually changed in this way until it reaches the target parameter. This makes it possible to reduce a sense of strangeness incurred by a rapid change of setting.

Note that a timing at which the instructing section 23 instructs the executing section 12 to change setting can be, for example, (i) a timing at which a user presses any of the preference buttons 101 and an identification signal sent from the remote controller 100 is received or (ii) a timing at which a control signal sent from the remote controller 100 by a specified user is received. In the case of, for example, a remote controller including a fingerprint sensor, setting may be changed at a timing at which the fingerprint sensor identifies a user and an identification signal sent from the remote controller is received.

Meanwhile, setting may be instantaneously changed at the time of activation of power or at the time of input switching of an external connection device.

### (Display of Recorded Program List Corresponding to User)

The following describes a flow of recorded program list creation in the display apparatus 10 with reference to Fig. 6. Fig. 6 is a diagram explaining processing of creating a recorded program list in the display apparatus 10.

The display information creating section 30 (i) creates a recorded program list of programs recorded on a recorder section (not illustrated) for recording a program received by the tuner 31 and (ii) causes the recorded program list thus created to be displayed on the display section 25. Here, the display information creating section 30 preferably (i) acquires, from the recording section 22, recording history information corresponding to the identification information received by the remote-controller-light receiving section 20 and (ii) creates a recorded program list corresponding to the recording history information thus acquired. The recording history information is information on programs recorded in response to instructions from a user.

For example, (a) of Fig. 6 is an example of the recorded program list created in a case where the preferred setting is not reflected. In this recorded program list, programs recorded in response to instructions from a plurality of users are mixedly displayed.

In a case where a user specified by the user specifying section 21 is "mother", the display information creating section 30 creates a recorded program list of programs recorded in response to instructions from "mother" and causes the recorded program list thus created to be displayed, as illustrated in (b) of Fig. 6. In a case where a user specified by the user specifying section 21 is "father", the display information creating section 30 creates a recorded program list of programs recorded in response to instructions from "father" and causes the recorded program list thus created to be displayed, as illustrated in (c) of Fig. 6. In a case where a user specified by the user specifying section 21 is "child", the display information creating section 30 creates a recorded program list of programs recorded in response to instructions from "child" and causes the recorded program list thus created to be displayed, as illustrated in (d) of Fig. 6.

Since a list of programs recorded by a user who is sending an operation instruction is displayed in the recorded program list, the user can easily select a program which the user wants to play.

In a case where the remote-controller-light receiving section 20 receives a plurality of different sets of identification information within a predetermined period of time, the display information creating section 30 may (i) acquire a plurality of sets of recording history information that correspond to the plurality of sets of identification information and (ii) create a recorded program list combining programs recorded in response to instructions from a plurality of users on the basis of the plurality of sets of recording history information thus acquired.

Accordingly, even in a case where a plurality of users send operation instructions to the display apparatus 10 within a predetermined period of time, it is possible to display a list combining programs recorded by the plurality of users. Consequently, it is possible to more easily find out a target program than a case where all of the recorded programs are displayed.

Note that the recorder section may be provided inside the display apparatus 10 or may be an external device.

### (Frequently-Watched Program Setting)

The display information creating section 30 (i) creates a program guide on the basis of program information concerning programs that is acquired by acquiring means (not illustrated) and (ii) causes the program guide thus created to be displayed on the display section 25. The program information may be acquired from a broadcasting wave received via the antenna 35 or may be acquired from the Internet, for example.

The display information creating section 30 preferably (i) acquires, from the recording section 22, viewing history information corresponding to the identification information received by the remote-controller-light receiving section 20, (ii) selects, from the program information acquired by the acquiring means, a program that is frequently watched by the user on the basis of the viewing history information, and (iii) creates a program guide in which the program thus selected is emphasized. The viewing history information is information on programs which a user watched in the past.

For example, the display information creating section 30 creates, by referring to viewing history information on programs watched in the past by a user who is using the display apparatus 10, a program guide in which a program that is frequently watched by the user (hereinafter referred to also as a frequently-watched program) is emphasized, by providing, in the program guide, a section "frequently-watched program" in which the program that is frequently watched by the user is displayed like a channel.

Such a program that is frequently watched by a user (referred to also as a frequently-watched program) may be emphasized by displaying such a program like a channel. Further, a program that is especially frequently watched may be emphasized by coloring a section for the program.

In this case, the column for the frequently-watched program in the program guide can be automatically changed to one corresponding to a user who is using the display apparatus 10, for example, by providing a "frequently-watched program" button on the remote controller 100 in advance and pressing this button. Note that the frequently-watched program is automatically saved on the recording section 22. Since a program that is frequently watched by a user who is sending an operation instruction is displayed in an emphasized manner in a program guide, the user can easily select a program.

In a case where the remote-controller-light receiving section 20 receives a plurality of different sets of identification information within a predetermined period of time, the display information creating section 30 may (i) acquire a plurality of sets of viewing history information that correspond to the plurality of sets of identification information and (ii) create a program guide on the basis of the plurality of sets of viewing history information thus acquired.

For example, in a case where "mother" and "child" are using the display apparatus 10, a column for frequently-watched programs can be displayed by combining program information on programs watched by "mother" in the past and program information on programs watched by "child" in the past. Consequently, even in a case where a plurality of users send operation instructions to the display apparatus 10 within a predetermined period of time, users' preferences can be reflected by displaying, in an emphasized manner, programs that are frequently watched by the users.

Alternatively, it is also possible to employ an arrangement in which (i) desired channel numbers are associated with respective sets of identification information and recorded on the recording section 22 and (ii) a program of a channel number that corresponds to a user who is using the display apparatus 10 is automatically displayed.

### <Second Embodiment>

Another embodiment of the present invention is described below with reference to Figs. 7 through 17.

### [Configuration of Display Apparatus 10']

First, a configuration of a display apparatus 10' of Second Embodiment and a configuration of a control apparatus 200 that operates the display apparatus 10' are described with reference to Fig. 7. Fig. 7 is a block diagram illustrating a configuration of the display apparatus 10' and a configuration of the control apparatus 200 that operates the display apparatus 10'.

As illustrated in Fig. 7, the display apparatus 10' includes a display section 11, a remote-controller-light receiving section 20', a camera 13, and the control apparatus 200. The control apparatus 200 includes an instruction acquiring section 110, a user registering section 120, a processing setting section 130, a recording section 140, a user recognizing section 150, a display control section 160, and a processing executing section 170. The display apparatus 10' is configured to be capable of receiving a remote controller signal supplied from a remote controller 100'.

The display section 11 displays an image on the basis of an instruction from the control apparatus 200. Specifically, the display section 11 is configured to include a display element included in a LCD, an EL (Electroluminescence) display, a PDP (Plasma Display Panel), or the like, and a driver circuit for driving the display element on the basis of a received video signal. Note that the term "image" encompasses drawing, figure, and text and encompasses a still image and a moving image.

The remote-controller-light receiving section 20' receives a remote control signal from the remote controller 100'. The remote control signal can be received, for example, via light such as infrared rays, but is not limited to this. The remote-controller-light receiving section 20' sends the remote control signal thus received to the control apparatus 200.

The camera 13 is provided in a position where it can photograph surroundings of the display apparatus 10' (e.g., a region in which a user who is watching the display apparatus is supposed to be present). The camera 13 generates photographed image information by photographing the surroundings of the display apparatus 10'. The camera 13 can be, for example, a CCD (Charge Coupled Device) camera, but is not limited to this. Note that the camera 13 need not necessarily be integral with the display apparatus 10', and may be a member separate from the display apparatus 10'.

### (Control Apparatus 200)

The control apparatus 200 collectively controls the sections of the display apparatus 10'. The following describes the instruction acquiring section 110, the user registering section 120, the processing setting section 130, the recording section 140, the user recognizing section 150, the display control section 160, and the processing executing section 170 that are provided in the control apparatus 200.

The instruction acquiring section 110 acquires, from the remote-controller-light receiving section 20', an instruction (remote control signal) that is given by a user with the use of the remote controller 100'. The instruction acquiring section 110 sends, in accordance with the remote control signal thus acquired, an operation instruction to the user registering section 120, the processing setting section 130, the user recognizing section 150, and the processing executing section 170. Specifically, the instruction acquiring section 110 sends a user registering instruction to the user registering section 120 in a case where the remote control signal thus acquired is a signal indicative of an instruction to record a user name of the user and face information of the user. The instruction acquiring section 110 sends a specific processing setting instruction to the processing setting section 130 in a case where the remote control signal thus acquired is a signal indicative of an instruction to set a combination (user-specific processing) of a plurality of sets of processing that can be executed by an instruction from a user. The instruction acquiring section 110 sends a user recognizing instruction to the user recognizing section 150 in a case where the remote control signal thus acquired is a signal indicative of an instruction to recognize a user recorded in the recording section 140 in advance. The instruction acquiring section 110 sends a specific processing executing instruction to the processing executing section 170 in a case where the remote control signal thus acquired is a signal indicative of an instruction to execute at least one processing out of a plurality of sets of user-specific processing.

The user registering section 120 causes data (hereinafter referred to as user information) in which a user name of a user who is watching the display apparatus 10' and face information of the user are associated with each other to be stored in the recording section 140 in accordance with the user registering instruction supplied from the instruction acquiring section 110. The face information of a user is, for example, information indicative of features of a user's face such as a position of a tail of eyes and a position of eyebrows which features are extracted from the photographed image information acquired from the camera 13.

The processing setting section 130 sets a content of the user-specific processing in accordance with the specific processing setting instruction supplied from the instruction acquiring section 110. In a case where, for example, the user-specific processing is a user macro, the specific processing setting instruction is constituted by an instruction to start setting of a content of the user macro, an instruction to transmit contents of individual sets of processing constituting the user macro, and an instruction to end the setting of the content of the user macro. In a case where the user-specific processing is a priority AV position (later described), the specific processing setting instruction is an instruction to designate a certain image quality as a priority image quality. Further, the processing setting section 130 determines a name of the user-specific processing. The processing setting section 130 records, on the recording section 140, data in which (i) user information of a user who has inputted processing constituting the content of the user-specific processing, (ii) the user-specific processing whose content has been set, and (iii) a name of the user-specific processing are associated with each other.

The content of the user-specific processing can be set by combining a plurality of sets of processing in accordance with a user's instruction. Alternatively, the content of the user-specific processing can be set on the basis of a history of execution instructions inputted within a past predetermined period of time by a user who has inputted processing constituting the content of the user-specific processing. The history of execution instructions is associated with user information of the user that is acquired from the recording section 140 by the processing setting section 130. Specific examples of setting of the content of the user-specific processing are described in detail in (Setting Example 1) through (Setting Example 3) described later.

On the recording section 140, user information in which a user and face information of the user are associated with each other is recorded. Further, on the recording section 140, data in which (i) user information of a user who has inputted processing constituting the content of the user-specific processing, (ii) the user-specific processing whose content has been set, and (iii) a name of the user-specific processing are associated with each other is recorded. In addition, on the recording section 140, data in which a history of execution instructions inputted by a user within a past predetermined period of time and user information corresponding to the user are associated with each other is recorded.

The "past predetermined period of time" can be, for example, past 1 hour or past 2 hours. For example, it is possible to employ an arrangement in which (i) the past predetermined period of time is recorded on the user recognizing section 150 in advance, (ii) the user recognizing section 150 records, on the recording section 140, data in which a history of execution instructions inputted by a user within the past predetermined period of time and user information corresponding to the user are associated with each other, and (iii) the user recognizing section 150 deletes data recorded even before the past predetermined period of time. The following describes a case where the user recognizing section 150 manages the data in which a history of execution instructions inputted by a user within the past predetermined period of time and user information corresponding to the user are associated with each other. However, another section for managing the data stored in the recording section 140 may be provided inside the control apparatus 200 or separately from the control apparatus 200.

The recording section 140 is a section in which various kinds of data and programs are stored. Examples of the recording section 140 include a ROM which is a read-only semiconductor memory in which fixed data such as a program necessary for the control apparatus 200 to operate is stored and a RAM (Random Access Memory) which is a so-called working memory in which data for computation and data of a result of computation are temporarily stored.

Note that the recording section 140 need not necessarily be provided inside the control apparatus 200. That is, the recording section 140 may be provided inside the display apparatus 10' separately from the control apparatus 200 or may be provided separately from the display apparatus 10'.

The user recognizing section 150 recognizes, in accordance with the user recognizing instruction supplied from the instruction acquiring section 110, a user recorded on the recording section 140 in advance (user recognizing step). The user recognizing section 150 acquires, from the camera 13, the photographed image information generated by the camera 13, and then extracts, from the photographed image information, user face information indicative of features of the user's face. The user recognizing section 150 collates the user face information thus extracted with user face information contained in user information of users recorded in advance on the recording section 140. Note that this collating method is publicly known, and therefore is not explained. In a case where it is determined, as a result of the collation, that a matching rate between any of the user face information recorded on the recording section 140 and the user face information extracted from the photographed image information is higher than a predetermined value (case where a match rate is high), user information containing the user face information that matches, at a high rate, the user face information extracted from the photographed image information is acquired from the recording section 140. The user recognizing section 150 sends the user information thus acquired to the display control section 160. In a case where it is determined, as a result of the collation, that a matching rate between any of the user face information recorded on the recording section 140 and the user face information extracted from the photographed image information is lower than the predetermined value (case where a match rate is low), the user recognizing section 150 causes the display section 11 to display a human specifying error (specifying error). The specifying error can be displayed, for example, by displaying it on part (e.g., lower left side) of a screen with the use of the OSD function. However, a method of displaying the specifying error is not limited to this. Note that it is unnecessary to display the specifying error in a case where the display section 11 is in a state in which it cannot display an image.

The display control section 160 causes the display section 11 to display a name of user-specific processing that is at least one processing associated in advance with a user recognized by the user recognizing section 150 (displaying step). Specifically, the display control section 160 acquires, from the recording section 140, a name of user-specific processing associated with the user information acquired from the user recognizing section 150, and then causes the display section 11 to display the name of the user-specific processing.

The processing executing section 170 executes processing indicated by the specific processing executing instruction in accordance with the specific processing executing instruction supplied from the instruction acquiring section 110 (processing executing step). Specifically, the processing executing section 170 (i) receives, from the instruction acquiring section 110 via the remote-controller-light receiving section 20, information specifying user-specific processing selected by a user, i.e., a name of at least one user-specific processing selected by the user from names displayed on the display section 11, (ii) acquires, from the recording section 140, user-specific processing corresponding to the name thus received, and (iii) executes the user-specific processing thus acquired. Further, the processing executing section 170 causes a result of the execution to be displayed on the display section 11.

### [Operation of Control Apparatus 200]

An operation of the control apparatus 200 is described below with reference to Fig. 8. Fig. 8 is a flow chart showing a flow of a series of steps carried out in the control apparatus 200, i.e., the user recognizing step, the displaying step, and the processing executing step.

As shown in Fig. 8, when the user recognizing section 150 acquires the user recognizing instruction from the instruction acquiring section 110, the camera 13 photographs a user's face image (step S31). Note that a timing at which the instruction acquiring section 110 sends the user recognizing instruction to the user recognizing section 150 is, for example, (i) a timing at which the camera 13 recognizes that a user has entered a photographable region of the camera 13 and transmits the recognition to the user recognizing section (i.e., when a user enters the photographable region, the camera 13 automatically starts photographing), (ii) a timing at which some kind of operation is performed with respect to the display apparatus 10' for the first time after turning on the display apparatus 10', or (iii), in a case where the user-specific processing is to set priority levels to image qualities (AV positions), a timing at which a list display button of the remote controller 100' is pressed.

The user recognizing section 150 acquires, from the camera 13, photographed image information of the image taken by the camera 13, and extracts, from the photographed image information, user face information indicative of features of the user's face. The user recognizing section 150 collates the user face information thus extracted with user face information contained in user information recorded in advance on the recording section 140 (step S32). In a case where it is determined, as a result of the collation, that a matching rate between any of the user face information recorded on the recording section 140 and the user face information extracted from the photographed image information is low (in a case where the user cannot be recognized) (NO in step S32), the user recognizing section 150 causes the display section 11 to display a specifying error (step S33). In a case where a matching rate between any of the user face information recorded on the recording section 140 and the user face information extracted from the photographed image information is high (in a case where the user can be recognized) (YES in step S32), the user recognizing section 150 sends, to the display control section 160, user information containing the user face information thus recognized. The display control section 160 acquires, from the recording section 140, a name of at least one user-specific processing that is associated in advance with the user information acquired from the user recognizing section 150, and then causes the name of the at least one user-specific processing thus acquired to be displayed on the display section 11 (step S34). Step S34 allows the user (i) to see the name of the at least one user-specific processing displayed on the display section 11 and (ii) to select at least one name. After the user selects at least one name, the processing executing section 170 acquires, from the recording section 140, user-specific processing corresponding to the name thus selected, and executes the user-specific processing thus acquired (step S35).

With the arrangement, the control apparatus 200 executes user-specific processing in response to recognition of a user, as long as the user-specific processing is recorded in advance. Accordingly, the user can cause the display apparatus 10' to execute desired processing without performing any input operation. This saves the user the trouble of carrying out an input operation.

### (Example of Setting and Execution of User-Specific Processing)

With reference to Figs. 9 through 17, the following describes specific examples of a procedure of setting user-specific processing and a procedure of executing the user-specific processing thus set.

### (Setting Example 1)

The following describes a first example of a procedure of setting user-specific processing with reference to Figs. 9 and 10. In the present example, it is assumed that user-specific processing (user macro) is carried out by a user in the display apparatus 10'.

Fig. 9 is a diagram showing a procedure of setting a user macro. As shown in Fig. 9, when setting of a user macro starts (step S41), the display apparatus 10' displays a user selection screen. On the user selection screen, a list of user names recorded on the recording section 140 is displayed. For example, in a case where "father", "mother", "brother", ... are recorded, as user names, on the recording section 140 as shown in Fig. 9, "father", "mother", "brother", ... are displayed on the user selection screen. On the user selection screen, a user selects a user name of a user whose user macro is to be set (step S42). Note that the order of user names displayed is not limited to this. When a user name is selected on the user selection screen, setting of a content of a user macro starts. The user inputs processing that constitutes the content of the user macro. After the user finishes inputting processing that constitutes the content of the user macro, setting of the content of the user macro is finished (step S43). After the setting of the content of the user macro is finished, the user inputs a name (item name) of the user macro. In addition, the user selects a design of an icon to be displayed along with the item name on a screen such as a screen for confirmation of the setting content. Then, the screen for confirmation of the setting content is displayed, and the setting is finished (step S44).

Note that the steps above need not be carried out in the order described above. For example, setting of the content of the user macro may be carried out before selection of a user name. With reference to Fig. 10, the following describes a procedure of setting a user macro carried out in a case where setting of a content of the user macro is performed before selection of a user name.
(a) of Fig. 10 is a diagram illustrating an exemplary configuration of the remote controller 100'. As illustrated in (a) of Fig. 10, the remote controller 100' has a recording start button. When a user presses the recording start button of the remote controller 100', the processing setting section 130 starts setting of a user macro. This corresponds to step S41 in Fig. 9. Since setting of a content of the user macro is carried out before selection of a user name, setting of a content of the user macro in step S43 starts at the same time as step S41.
(b) of Fig. 10 illustrates an example of an execution screen for operation setting in setting of the content of the user macro. Specifically, (b) of Fig. 10 illustrates a screen for setting an operation of switching, on an input switching screen, image input of the display apparatus 10' from "current input" to "input 4". The input switching screen is a screen which allows image input of the display apparatus 10' to be switched in accordance with a user's instruction and which displays a list of available kinds of image input, like the one illustrated in (b) of Fig. 10. The "current input" refers to a kind of image input that is currently being displayed on the display apparatus 10'. For example, in a case where the "current input" is "TV", a list of available kinds of image input is displayed on the input switching screen, and a cursor is located on "TV". After the input switching screen is displayed, the user moves the cursor downwards four times and selects "input 4". In this way, the user carries out an operation of switching the image input of the display apparatus 10' from "TV" to "input 4". Note that the way in which the input is switched is not limited to this. For example, the image input can be switched to "input 4" by pressing a switching button for switching the image input to "input 4" which button is provided on the remote controller 100'. This operation corresponds to the operation setting in step S43.
(c) of Fig. 10 is a diagram illustrating an exemplary configuration of the remote controller 100'. As illustrated in (c) of Fig. 10, the remote controller 100' has a recording end button. When the user presses the recording end button of the remote controller 100', the processing setting section 130 finishes setting of the content of the user macro. This operation corresponds to the processing in step S43 of finishing setting of the content of the user macro.
(d) of Fig. 10 illustrates an example of the user selection screen. In a case where "father", "mother", "sister", and "Mitsuo" are recorded, as user names, on the recording section 140, the display apparatus 10' displays a list of "father", "mother", "sister", and "Mitsuo", as illustrated in (d) of Fig. 10. The user selects, on the user selection screen, a user name of a user for whom the user macro is to be registered. (d) of Fig. 10 illustrates an example in which "mother" is selected. This corresponds to step S42.
(e) of Fig. 10 is a screen for setting an item name of this user macro. The user inputs, on this screen, a desired item name. (f) of Fig. 10 is a screen for selecting a design of an icon to be displayed along with the item name on a screen such as a screen for confirmation of a setting content. The user can select his or her favorite icon from a list of icon designs. The user selects an icon by moving the cursor. In (f) of Fig. 10, an oval icon is selected. (g) of Fig. 10 is a screen for confirmation of data selected on the screen of (d) of Fig. 10 through the screen of (f) of Fig. 10. Here, setting of the user macro is finished. This corresponds to step S44.

Note that configurations of the screens illustrated in Fig. 10 that are displayed on the display apparatus 10' are not limited to those described above. The data may be displayed on each of these screens by using a method using the OSD function or may be displayed by using a method of displaying it on part of the screen. Further, a configuration of the remote controller 100' is not limited to that described above.

### (Execution Example 1)

With reference to Fig. 11, the following describes a first example of a procedure through which a user who is watching the display apparatus 10' executes user-specific processing. In the present example, a procedure for executing the user-specific processing that has been set in Setting Example 1 described above is described with reference to Fig. 11.
(a) of Fig. 11 is a diagram illustrating an exemplary configuration of the remote controller 100'. As illustrated in (a) of Fig. 11, the remote controller 100' has a list display button. When a user presses the list display button, the camera 13 photographs a face image of the user, and the user recognizing section 150 identifies the user. That is, the display apparatus 10' executes the processing in step S31 and the processing in step S32 of Fig. 8.
(b) of Fig. 11 is an example of a case where a list of item names of user macros set in step S44 by the user thus identified is displayed on the display apparatus 10'. As illustrated in (b) of Fig. 11, the item name "video switching" set in Setting Example 1 is included in the list. That is, the display apparatus 10' executes the processing in step S34.

In a case where the user selects the item name "video switching" set in Setting Example 1 from the item names of the user macros displayed on the display apparatus 10' of (b) of Fig. 11, the image input of the display apparatus 10' is switched from "current input" to "input 4". (c) of Fig. 11 is a diagram showing that the image input of the display apparatus 10' has been switched from "current input" to "input 4".

In the present example, a single item name of a user macro is selected. However, the present embodiment is not limited to this. A plurality of item names of user macros can be selected.

Note that configurations of the screens illustrated in Fig. 11 that are displayed on the display apparatus 10' are not limited to those described above. The data may be displayed on each of these screens by using a method using the OSD function or may be displayed by using a method of displaying it on part of the screen. Further, a configuration of the remote controller 100' is not limited to that described above.

As a result of Setting Example 1 and Execution Example 1, the processing setting section 130 can set a content of a user macro by combining a plurality of sets of processing in accordance with an instruction from a user. Further, in a case where a content of the user macro is set in advance, the user macro is executed in response to recognition of the user. This saves the user the trouble of carrying out an input operation.

### (Setting Example 2)

With reference to Figs. 12 and 13, the following describes a second example of a procedure through which a user who is watching the display apparatus 10' sets user-specific processing. In the present example, setting of giving priority to an image quality (AV position) of an image displayed on the display apparatus 10' is user-specific processing (priority AV position).

Fig. 12 is a diagram showing a flow of setting of a priority AV position. As shown in Fig. 12, when setting of a priority AV position starts (step S51), the display apparatus 10' displays a user selection screen. On the user selection screen, a list of user names recorded on the recording section 140 is displayed. For example, in a case where "father", "mother", "brother", ... are recorded, as user names, on the recording section 140, "father", "mother", "brother", ... are displayed on the user selection screen. The user selects, on the user selection screen, a user name of a user for whom a certain image quality is to be designated as a priority image quality (step S52). Note that the order in which the user names are displayed is not limited to this. When a user name is selected on the user selection screen, the display apparatus 10' displays an AV position selection screen. The user selects an image quality to be set as an AV position (step S53). The image quality that can be set as the AV position may be an image quality that is preset in the display apparatus 10' or may be an image quality that has been adjusted by the user. Alternatively, the image quality that can be set as the AV position may be an image quality (current setting) of an image which the user is currently watching. After finishing selection of an image quality, the user inputs a name (item name) of the AV position. In addition, the user selects a design of an icon to be displayed along with the item name on a screen such as a screen for confirmation of a setting content(step S54). After step S54, the display apparatus 10' displays, as a current priority position, an item name that is being set as an AV position to which priority is given. Further, the display apparatus 10' displays, on a priority setting window, the item name set in step S53 and an item name set in the past. In a case where the user wants to change the current priority position, the user selects an item name on the priority setting window. Then, the display apparatus 10' displays a screen for confirmation of a setting content. Here, setting of the priority AV position is finished (step S55). Note that the item names displayed on the priority setting window are not limited to those described above. For example, an item name set by another user in the past may be displayed or an item name preset in the display apparatus 10' may be displayed.

Note that the above steps need not be carried out in the order described above. For example, selection of an image quality may be carried out before selection of a user name. With reference to Fig. 13, the following describes a flow of processing of setting a priority AV position in a case where selection of an image quality is carried out before selection of a user name.
(a) of Fig. 13 illustrates an example of the AV position selection screen. As illustrated in (a) of Fig. 13, after start of setting of a priority AV position, the display apparatus 10' displays the AV position selection screen. A user selects an image quality to be set as an AV position. In (a) of Fig. 13, the user selects current setting. This processing corresponds to step S53 in Fig. 12.
(b) of Fig. 13 illustrates an example of the user selection screen. In a case where "father", "mother", "sister", and "Mitsuo" are recorded, as user names, on the recording section 140, the display apparatus 10' displays a list of "father", "mother", "sister", and "Mitsuo", as illustrated in (b) of Fig. 13. The user selects, on the user selection screen, a user name of a user for whom the AV position is set. (b) of Fig. 13 illustrates an example in which the user selects "father". This processing corresponds to step S52.
(c) of Fig. 13 is a screen for setting an item name of the AV position. The user can input a desired item name. (d) of Fig. 13 is a screen for selecting a design of an icon to be displayed along with the item name on a screen such as a screen for confirmation of a setting content. The user can select his or her favorite icon from a list of icon designs. In (d) of Fig. 13, the user selects an oval icon. This processing corresponds to step S54.
(e) of Fig. 13 is an example of the priority setting window. The display apparatus 10' displays, as a current priority position, an item name that is being set as the AV position to which priority is given. As illustrated in (e) of Fig. 13, the current priority position is "movie". Further, the display apparatus 10' displays, on the priority setting window, the item name set in (c) of Fig. 13 and an item name set in the past. In a case where the user wants to change the current priority position from "movie" to "my image quality", the user selects "my image quality" on the priority setting window. (f) of Fig. 13 is a screen for confirmation of data selected on the screen of (a) of Fig. 13 through the screen of (e) of Fig. 13. Here, setting of the priority AV position is finished. This corresponds to step S55.

Note that configurations of the screens illustrated in Fig. 10 that are displayed on the display apparatus 10' are not limited to those described above. The data may be displayed on each of these screens by using a method using the OSD function or may be displayed by using a method of displaying it on part of the screen. Further, a configuration of the remote controller 100' is not limited to that described above.

### (Execution Example 2)

With reference to Figs. 14 through 16, the following describes a second example of a procedure through which a user who is watching the display apparatus 10' executes user-specific processing. The present example describes a flow of execution of the user-specific processing set in Setting Example 2 described above.
(a) of Fig. 14 is a diagram illustrating an exemplary configuration of the remote controller 100'. As illustrated in (a) of Fig. 14, the remote controller 100' has a list display button. When a user presses the list display button, the camera 13 photographs a face image of the user, and the user is identified on the basis of the face image. That is, the display apparatus 10' carries out the processing in step S31 and the processing in step S32 of Fig. 8.
(b) of Fig. 14 illustrates an example of how a list including the item name set in step S54 by the user thus identified is displayed on the display apparatus 10'. As illustrated in (b) of Fig. 14, the item name "my image quality" set in Setting Example 2 is included in the list. That is, the display apparatus 10' carries out the processing in step S34.

In a case where the user selects "movie" from the item names displayed on the display apparatus 10' of (b) of Fig. 14, a current priority position of the display apparatus 10' is set to "movie". (c) of Fig. 14 is a confirmation screen showing that the current priority position of the display apparatus 10' has been set to "movie".

Fig. 15 is a flow chart showing processing of automatically switching an image quality of an image that is being displayed on the display apparatus 10' from current setting to an image quality corresponding to the current priority position set by the user. As illustrated in Fig. 15, when recognition of a user (viewer) who is watching the display apparatus starts (when the user recognizing section 150 acquires a user recognizing instruction from the instruction acquiring section 110), the user recognizing section 150 acquires, from the camera 13, photographed image information on an image taken by the camera 13 and extracts, from the photographed image information, user face information indicative of features of the user's face. The user recognizing section 150 collates the user face information thus extracted with user face information contained in user information recorded in advance on the recording section 140 (step S61). In a case where it is determined, as a result of the collation, that a matching rate between any of the user face information recorded on the recording section 140 and the user face information extracted from the photographed image information is low (case where the user cannot be recognized) (NO in step S61), the display apparatus 10' displays a specifying error (step S62). In a case where it is determined that a matching rate between any of the user face information recorded on the recording section 140 and the user face information extracted from the photographed image information is high (case where the user can be recognized) (YES in step S61), the image quality is changed to the current priority position set by the user thus recognized (step S63).

Accordingly, in a case where the current priority position set by the user who is watching the display apparatus 10' is "movie", the display apparatus 10' changes an image quality of an image that is being displayed from "current setting" to "movie". Fig. 16 is a diagram showing that the AV position of the display apparatus 10' has been changed from "current setting" to "movie".

Note that configurations of the screens illustrated in Figs. 14 and 16 that are displayed on the display apparatus 10' are not limited to those described above. The data may be displayed on each of these screens by using a method using the OSD function or may be displayed by using a method of displaying it on part of the screen. Further, a configuration of the remote controller 100' is not limited to that described above.

As a result of Setting Example 2 and Execution Example 2, the processing setting section 130 can sets a priority AV position. Further, a current priority position can be set by setting a content of priority AV position setting in advance and executing the priority AV position setting. Since an image quality of an image displayed on the display apparatus 10' is changed, in response to recognition of a user, to a current priority position set by the user, it is possible to save the user the trouble of carrying out an input operation.

### (Setting Example 3)

With reference to Fig. 17, the following describes a third example of a procedure through which a user who is watching the display apparatus 10' sets user-specific processing. In the present example, processing selected from a history of execution instructions given by a user to the display apparatus 10' is set as the user-specific processing.

When setting of the user-specific processing starts (step S71), the display apparatus 10' displays a user selection screen. On the user selection screen, a list of user names recorded on the recording section 140 is displayed. For example, in a case where "father", "mother", "brother", ... are recorded, as user names, on the recording section 140, "father", "mother", "brother", ... are displayed on the user selection screen. The user selects, on the user selection screen, a user name of a user whose user-specific processing is to be set (step S72). Note that the order in which the user names are displayed is not limited to this. When a user name is selected on the user selection screen, a content of the user-specific processing is set. The display apparatus 10' displays a history list screen. Displayed on the history list screen is a history of execution instructions inputted by the user within a past predetermined period of time which history corresponds to user information of the user recorded on the recording section 140. The user selects at least one operation which the user wants to set (step S73). After finishing setting of the content of the user-specific processing, the user inputs a name (item name) of the user-specific processing. Further, the user selects a design of an icon to be displayed along with the item name on a screen such as a screen for confirmation of a setting content. Then, a screen for confirmation of a setting content is displayed, and setting is finished (step S74).

Note that the above steps need not be carried out in the order described above. For example, setting of a content of the user-specific processing may be carried out before selection of a user name.

The user-specific processing set in Setting Example 3 can be executed by a similar procedure to that of Execution Example 1 described above.

In a case where a content of user-specific processing is set on the basis of a history of execution instructions inputted by a user as described above, the content of the user-specific processing can be set on the basis of a history of general input operations without the need to carry out an input operation for setting the content of the user-specific processing. This saves the user the trouble of carrying out an input operation for setting the content of the user-specific processing.

The present invention is not limited to the description of the embodiments above, but may be altered by a skilled person within the scope of the claims. An embodiment based on a proper combination of technical means disclosed in different embodiments is encompassed in the technical scope of the present invention.

### [Other Embodiments]

The display apparatus (television receiver) 10 of First Embodiment may be, for example, configured to include an external camera 40, as illustrated in Fig. 18. The external camera 40 may be connected to the display apparatus 10 via an HDMI receiver 41 by HDMI-compliant interface means. In this case, the external camera 40 photographs a user's face, and the image of the user's face thus obtained is sent to the user specifying section 21. In a case where face images of respective users are recorded in advance on the recording section 22, the user specifying section 21 can (i) check whether or not an image corresponding to the image taken by the external camera 40 is recorded on the recording section 22 and (ii) send a result of the checking to the instructing section 23. This makes it possible to reflect a photographed user's favorite setting.

Second Embodiment has dealt with a case where the camera 13, which is provided in the display apparatus 10', photographs a user's face. However, it is also possible to employ an arrangement in which the display apparatus 10' and an external camera 50 are connected via an HDMI receiver 51 by HDMI-compliant interface means, as illustrated in Fig. 19. Although Figs. 18 and 19 both illustrate a case where the HDMI standard is adopted, the connection may be achieved by interface means that complies with a standard such as the USB standard, Wi-Fi standard, or DLNA communication standard.

Further, as illustrated in Fig. 20, the external camera 50 may be a camera provided in a camera-equipped mobile phone 53. In Fig. 20, the camera-equipped mobile phone 53 is connected to the display apparatus 10' via an HDMI cable 54. A transmission path may be wired or may be wireless. Note that the external camera 40 provided in the display apparatus 10 illustrated in Fig. 18 may also be a camera provided in a camera-equipped mobile phone.

It is also possible to employ an arrangement in which both of the camera 13 provided in the display apparatus 10' and the external camera 50 are used to specify a viewing position of a user so that accuracy of detecting a user's face is improved.

Further, the display apparatuses 10 and 10' may include human sensors 42 and 52, respectively, as illustrated in Figs. 18 and 19. Further, the display apparatuses 10 and 10' may include eye gaze detection sensors instead of the human sensors 42 and 52 or in addition to the human sensors 42 and 52. In a case where the display apparatuses 10 and 10' include the human sensors 42 and 52 and/or the eye gaze detection sensors, respectively, and where the cameras are controlled to take a photograph only when it is determined, as a result of detection of human movement and/or eye gaze, that a human is present, it is possible to reduce power consumption of the display apparatuses 10 and 10'.

Further, it is also possible to employ an arrangement in which the camera 13 of the display apparatus 10' is configured to be capable of rotating and tracking a user's movement in association with the human sensor 52 so that a user's face can be photographed by tracking a user's movement.

Further, it is also possible to employ an arrangement in which (i) the display apparatuses 10 and 10' are connected to the Internet and (ii) software for Skype (Registered Trademark) is installed in the display apparatuses 10 and 10' so that functions of Skype (Registered Trademark) can be used. In this case, the display apparatus 10 preferably further includes a microphone 43, and the display apparatus 10' preferably further includes an audio control section 53, a microphone 54, and a speaker 55. By installing software for achieving the functions of Skype (Registered Trademark) into each of the instructing section 23 and control apparatus 200, a user can use the functions of Skype (Registered Trademark). This is specifically described below by taking, as an example, the display apparatus 10' of Fig. 19. The display apparatus 10' (i) sends, to a communication partner via the Internet, an image of a user photographed by the external camera 50 (or the built-in camera 13 in Second Embodiment) and user's voice picked up by the microphone 54, (ii) causes the display section 11 to display an image of the communication partner that is sent from the communication partner, and (iii) causes communication partner's voice to be emitted from the speaker 55 of the display apparatus 10' or an external headphone (not illustrated) connected to a headphone terminal (not illustrated) of the display apparatus 10'.

### [Program and Recording Medium]

Finally, the sections (blocks) of the display apparatuses 10, 10', and the control apparatus 200 may be realized by way of hardware or software as executed by a CPU as follows:

The display apparatuses 10, 10', and the control apparatus 200 each include a CPU (central processing unit) and memory devices (memory media). The CPU (central processing unit) executes instructions in control programs realizing the functions. The memory devices include a ROM (read only memory) which contains programs, a RAM (random access memory) to which the programs are loaded, and a memory containing the programs and various data. With the arrangement, the objective of the present invention can be realized by a predetermined storage medium.

This storage medium is a computer-readable storage medium containing program code (executable program, intermediate code program, or source program) for the display apparatuses 10, 10', and the control apparatus 200, which is software realizing the aforementioned functions. This storage medium is mounted to the display apparatuses 10, 10', and the control apparatus 200. As such, the display apparatuses 10, 10', and the control apparatus 200 as a computer (or CPU, MPU) retrieve and execute the program code contained in the storage medium.

The storage medium for supplying the program code to the display apparatuses 10, 10', and the control apparatus 200 is not limited to specific structure and type. The storage medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

The objective of the present invention can be accomplished also by arranging the display apparatuses 10, 10', and the control apparatus 200 to be connectable to a communications network. In this case, the program code is delivered to the display apparatuses 10, 10', and the control apparatus 200 over the communications network. The communications network is not limited to specific type and form, provided that it can deliver the program code to the display apparatuses 10, 10', and the control apparatus 200. The communications network may be, for example, the Internet, an intranet, extranet, LAN, ISDN, VAN, CATV communications network, virtual dedicated network (virtual private network), telephone line network, mobile communications network, or satellite communications network.

The transfer medium which makes up the communications network is not limited to specific arrangement and type, provided that it is any medium that can transfer the program code. The transfer medium which makes up the communications network may be, for example, wired line, such as IEEE 1394, USB (Universal Serial Bus), electric power line, cable TV line, telephone line, or ADSL (Asymmetric Digital Subscriber Line) line; or wireless, such as infrared radiation (IrDA, remote control), Bluetooth (Registered Trademark), 802.11 wireless, HDR (high data rate), mobile telephone network, satellite line, or terrestrial digital network. The present invention encompasses a computer data signal in which the program code is embodied electronically and which is embedded in a carrier wave.

The display apparatus of the present invention is preferably arranged such that the executing means includes image quality adjusting means for (i) adjusting an image quality of the image and (ii) causing the image whose image quality has been adjusted to be displayed on the display section, the setting information is a setting value that is used for adjustment of the image quality by the image quality adjusting means, and the image quality adjusting means (i) acquires the setting value corresponding to the identification information received by the receiving section and (ii) adjusts the image quality on the basis of the setting value thus acquired.

According to the arrangement, the image quality adjusting means adjusts an image quality on a basis of a setting value for adjustment of an image quality and causes an image with the adjusted image quality to be displayed on the display section. Further, the setting value for adjustment of an image quality is recorded in such a manner that it is associated with identification information, and the image quality adjusting means adjusts an image quality on the basis of a setting value corresponding to identification information received by the receiving section. This makes it possible to display an image having an image quality adjusted to an image quality suited to a user who sends an operation instruction to the display apparatus.

The display apparatus of the present invention is preferably arranged to further include an audio output section that outputs audio, the executing means including sound quality adjusting means for (i) adjusting a sound quality of the audio and (ii) outputting, to the audio output section, the audio whose sound quality has been adjusted, the setting information being a setting value used for adjustment of the sound quality by the sound quality adjusting means, and the sound quality adjusting means (i) acquiring the setting value corresponding to the identification information received by the receiving section and (ii) adjusting the sound quality on the basis of the setting value thus acquired.

According to the arrangement, the sound quality adjusting means adjusts a sound quality on the basis of a setting value for adjustment of a sound quality, and outputs audio with the adjusted sound quality to the audio output section. Further, the setting value for adjustment of a sound quality is recorded in such a manner that it is associated with identification information, and the sound quality adjusting means adjusts a sound quality on the basis of a setting value corresponding to identification information received by the receiving section. This makes it possible to output audio whose sound quality has been adjusted to a sound quality suited to a user who sends an operation instruction to the display apparatus.

The display apparatus of the present invention is preferably arranged to further include registering means for (i) determining the setting value on a basis of an instruction that is given by a user via the receiving section and (ii) registering, in the recording section, associated information in which the setting value thus determined and the identification information are associated with each other.

According to the arrangement, it is unnecessary to acquire a setting value from an outside of the display apparatus. This allows for an improvement in convenience of a user.

The display apparatus of the present invention is preferably arranged such that the identification information recorded on the recording section is associated with a priority level, and in a case where the receiving section receives a plurality of different sets of identification information within a predetermined period of time, the executing means executes the operation on a basis of setting information corresponding to identification information of high priority out of the plurality of different sets of identification information.

According to the arrangement, for example, even in a case where a plurality of users send operation instructions to the display apparatus within a predetermined period of time, the executing means can promptly select setting information on the basis of a priority level associated with identification information and execute an operation on the basis of the setting information thus selected.

The display apparatus of the present invention is preferably arranged such that in a case where the receiving section receives a plurality of different sets of identification information within a predetermined period of time, the executing means (i) acquires a plurality of sets of setting information that correspond to the plurality of sets of identification information and (ii) executes the operation on a basis of setting information whose percentage is largest among the plurality of sets of setting information thus acquired.

According to the arrangement, for example, even in a case where a plurality of users send operation instructions to the display apparatus within a predetermined period of time, the executing means can execute an operation on the basis of setting popular to the users.

The display apparatus of the present invention is preferably arranged such that in a case where the receiving section receives a plurality of different sets of identification information within a predetermined period of time, the executing means (i) acquires a plurality of setting values that correspond to the plurality of sets of identification information and (ii) executes the operation on a basis of an average value of the plurality of setting values thus acquired.

According to the arrangement, for example, even in a case where a plurality of users send operation instructions to the display apparatus within a predetermined period of time, the executing means can execute an operation reflecting a plurality of setting values suited to the respective users.

The display apparatus of the present invention is preferably arranged such that in a case where the receiving section receives a plurality of different sets of identification information within a first predetermined period of time, the executing means (i) determines setting information used for execution of the operation on a basis of (a) a ratio at which the plurality of different sets of identification information are received within a second predetermined period of time and (b) a plurality of sets of setting information that correspond to the plurality of different sets of identification information thus received, and (ii) executes the operation on a basis of the setting information thus determined.

According to the arrangement, for example, even in a case where a plurality of users send operation instructions to the display apparatus within a first predetermined period of time, the executing means can execute an operation in accordance with a ratio at which the plurality of users send their identification information within a second predetermined period of time. Note that the first predetermined period of time and the second predetermined period of time may be the same length of time or may be different in length.

The display apparatus of the present invention is preferably arranged to further include: a broadcast wave receiving section that receives a broadcast wave of a program; and acquiring means for acquiring program information on the program received by the broadcast wave receiving section, the executing means including program guide creating means for (i) creating a program guide on a basis of the program information acquired by the acquiring means and (ii) causing the program guide thus created to be displayed on the display section, the setting information being viewing history information on programs which the user watched in the past, and the program guide creating means (i) acquiring viewing history information corresponding to the identification information received by the receiving section, (ii) selecting, on a basis of the viewing history information, a program which the user frequently watches from the program information acquired by the acquiring means, and (iii) creating a program guide in which the program thus selected is emphasized.

In this case, a program that is frequently watched by a user who is sending an operation instruction is emphasized in a program guide. This allows the user to easily select the program.

The display apparatus of the present invention is preferably arranged such that in a case where the receiving section receives a plurality of different sets of identification information within a predetermined period of time, the program guide creating means (i) acquires a plurality of sets of viewing history information that correspond to the plurality of sets of identification information and (ii) creates a program guide on a basis of the plurality of sets of viewing history information thus acquired.

Accordingly, even in a case where a plurality of users send operation instructions to the display apparatus within a predetermined period of time, users' preferences can be reflected by emphasizing programs that are frequently watched by the users.

The display apparatus of the present invention is preferably arranged to further include a broadcast wave receiving section that receives a broadcast wave of a program, the executing means including recorded program guide creating means for (i) creating a list of programs recorded on a recorder section for recording a program received by the broadcast wave receiving section and (ii) causing the list thus created to be displayed on the display section, the setting information being recording history information on programs recorded in accordance with an instruction from the user, and the recorded program guide creating means (i) acquiring recording history information corresponding to the identification information received by the receiving section and (ii) creating a list of programs that corresponds to the recording history information thus acquired.

In this case, a list of programs recorded by a user who is sending an operation instruction is displayed. This allows the user to easily select a program which the user wants to play.

The display apparatus of the present invention is preferably arranged such that in a case where the receiving section receives a plurality of different sets of identification information within a predetermined period of time, the recorded program guide creating means (i) acquires a plurality of sets of recording history information that correspond to the plurality of sets of identification information and (ii) creates, on a basis of the plurality of sets of recording history information thus acquired, a list combining programs recorded by instructions from a plurality of users.

According to the arrangement, even in a case where a plurality of users send operation instructions to the display apparatus within a predetermined period of time, a list combining programs recorded by the users who send the operation instructions. This allows the users to easily find out their target programs as compared with a case where all of the recorded programs are displayed.

The control apparatus of the present invention is preferably arranged to further include a processing setting section that sets a content of the user-specific processing with use of a combination of a plurality of sets of processing that can be executed by an instruction from the user.

According to the arrangement, the user-specific processing is a combination of a plurality of sets of processing that can be executed by an instruction from a user. The processing setting section sets a content of the user-specific processing, for example, by combining a plurality of sets of processing in accordance with an instruction from a user.

Accordingly, the content of the user-specific processing can be determined in accordance with user's preference.

The control apparatus of the present invention is preferably arranged such that the processing setting section sets the content of the user-specific processing on a basis of a history of execution instructions inputted by the user.

According to the arrangement, the content of the user-specific processing on the basis of a history of general input operations without the trouble of carrying out an input operation for setting the content of the user-specific processing.

This eliminates the trouble for a user to carry out an input operation for setting the content of the user-specific processing.

### Industrial Applicability

The present invention can be suitably applicable as a display apparatus for a television receiver, etc.

### Reference Signs List

10, 10': Display apparatus
12: Executing section (executing means)
13: Camera
20, 20': Remote-controller-light receiving section (receiving section)
21: User specifying section
22: Recording section
23: Instructing section
24: Image processing section (image quality adjusting means)
11, 25: Display section
26: Audio processing section (sound quality adjusting means)
27: Speaker (audio output section)
28: Registering section (registering means)
29: Calculating section
30: Display information creating section (program guide creating means, recorded program guide creating means)
100, 100': Remote controller
110: Instruction acquiring section
120: User registering section
130: Processing setting section
140: Recording section
150: User recognizing section
160: Display control section
170: Processing executing section
200: Control apparatus

## Claims

1. A display apparatus which includes a display section for displaying an image and which is operated by an operation terminal, comprising:
executing means for executing an operation of the display apparatus; and
a receiving section that receives a signal containing identification information for identifying a user who is using the operation terminal, the signal being sent from the operation terminal,
the executing means (i) acquiring setting information corresponding to the identification information received by the receiving section from among a plurality of sets of associated information recorded on a recording section and (ii) executing the operation on a basis of the setting information thus acquired, each of the plurality of sets of associated information being information in which identification information and setting information used for execution of the operation by the executing means are associated with each other.

2. The display apparatus according to claim 1, wherein:
the executing means includes image quality adjusting means for (i) adjusting an image quality of the image and (ii) causing the image whose image quality has been adjusted to be displayed on the display section,
the setting information is a setting value that is used for adjustment of the image quality by the image quality adjusting means, and
the image quality adjusting means (i) acquires the setting value corresponding to the identification information received by the receiving section and (ii) adjusts the image quality on the basis of the setting value thus acquired.

3. The display apparatus according to claim 1, further comprising an audio output section that outputs audio,
the executing means including sound quality adjusting means for (i) adjusting a sound quality of the audio and (ii) outputting, to the audio output section, the audio whose sound quality has been adjusted,
the setting information being a setting value used for adjustment of the sound quality by the sound quality adjusting means, and
the sound quality adjusting means (i) acquiring the setting value corresponding to the identification information received by the receiving section and (ii) adjusting the sound quality on the basis of the setting value thus acquired.

4. The display apparatus according to claim 2 or 3, further comprising registering means for (i) determining the setting value on a basis of an instruction that is given by a user via the receiving section and (ii) registering, in the recording section, associated information in which the setting value thus determined and the identification information are associated with each other.

5. The display apparatus according to any one of claims 1 through 4, wherein:
a plurality of sets of identification information each of which is associated with a priority level are recorded on the recording section, and
in a case where the receiving section receives a plurality of different sets of identification information within a predetermined period of time, the executing means executes the operation on a basis of setting information corresponding to identification information of high priority out of the plurality of different sets of identification information.

6. The display apparatus according to any one of claims 1 through 4, wherein:
in a case where the receiving section receives a plurality of different sets of identification information within a predetermined period of time, the executing means (i) acquires a plurality of sets of setting information that correspond to the plurality of sets of identification information and (ii) executes the operation on a basis of setting information whose percentage is largest among the plurality of sets of setting information thus acquired.

7. The display apparatus according to any one of claims 2 through 4, wherein:
in a case where the receiving section receives a plurality of different sets of identification information within a predetermined period of time, the executing means (i) acquires a plurality of setting values that correspond to the plurality of sets of identification information and (ii) executes the operation on a basis of an average value of the plurality of setting values thus acquired.

8. The display apparatus according to any one of claims 1 through 4, wherein:
in a case where the receiving section receives a plurality of different sets of identification information within a first predetermined period of time, the executing means (i) determines setting information used for execution of the operation on a basis of (a) a ratio at which the plurality of different sets of identification information are received within a second predetermined period of time and (b) a plurality of sets of setting information that correspond to the plurality of different sets of identification information thus received, and (ii) executes the operation on a basis of the setting information thus determined.

9. The display apparatus according to any one of claims 1 through 8, further comprising:
a broadcast wave receiving section that receives a broadcast wave of a program; and
acquiring means for acquiring program information on the program received by the broadcast wave receiving section,
the executing means including program guide creating means for (i) creating a program guide on a basis of the program information acquired by the acquiring means and (ii) causing the program guide thus created to be displayed on the display section,
the setting information being viewing history information on programs which the user watched in the past, and
the program guide creating means (i) acquiring viewing history information corresponding to the identification information received by the receiving section, (ii) selecting, on a basis of the viewing history information, a program which the user frequently watches from the program information acquired by the acquiring means, and (iii) creating a program guide in which the program thus selected is emphasized.

10. The display apparatus according to claim 9, wherein:
in a case where the receiving section receives a plurality of different sets of identification information within a predetermined period of time, the program guide creating means (i) acquires a plurality of sets of viewing history information that correspond to the plurality of sets of identification information and (ii) creates a program guide on a basis of the plurality of sets of viewing history information thus acquired.

11. The display apparatus according to any one of claims 1 through 8, further comprising a broadcast wave receiving section that receives a broadcast wave of a program,
the executing means including recorded program guide creating means for (i) creating a list of programs recorded on a recorder section for recording a program received by the broadcast wave receiving section and (ii) causing the list thus created to be displayed on the display section,
the setting information being recording history information on programs recorded in accordance with an instruction from the user, and
the recorded program guide creating means (i) acquiring recording history information corresponding to the identification information received by the receiving section and (ii) creating a list of programs that corresponds to the recording history information thus acquired.

12. The display apparatus according to claim 11, wherein:
in a case where the receiving section receives a plurality of different sets of identification information within a predetermined period of time, the recorded program guide creating means (i) acquires a plurality of sets of recording history information that correspond to the plurality of sets of identification information and (ii) creates, on a basis of the plurality of sets of recording history information thus acquired, a list combining programs recorded by instructions from a plurality of users.

13. A television receiver comprising a display apparatus as set forth in any one of claims 1 through 12.

14. A method for controlling a display apparatus which includes a display section for displaying an image and which is operated by an operation terminal,
the method comprising the steps of:
receiving a signal containing identification information for identifying a user who is using the operation terminal, the signal being sent from the operation terminal; and
acquiring, by referring to a recording section in which a plurality of sets of associated information are recorded, setting information corresponding to the identification information thus received and executing an operation of the display apparatus on a basis of the setting information thus acquired, each of the plurality of sets of associated information being information in which identification information and setting information used for execution of the operation by executing means for executing the operation of the display apparatus are associated with each other.

15. A program for causing a computer to operate as each means of a display apparatus as set forth in any one of claims 1 through 12.

16. A computer readable recording medium in which a program as set forth in claim 15 is stored.

17. A control apparatus which controls a display apparatus having a display section, comprising:
a user recognizing section that recognizes a user recorded in advance;
a display control section that causes the display section to display a name of user-specific processing which is at least one processing associated in advance with the user recognized by the user recognizing section; and
a processing executing section that (i) accepts an instruction from the user to execute at least one of the user-specific processing and (ii) executes processing indicated by the instruction.

18. The control apparatus according to claim 17, further comprising a processing setting section that sets a content of the user-specific processing with use of a combination of a plurality of sets of processing that can be executed by an instruction from the user.

19. The control apparatus according to claim 18, wherein:
the processing setting section sets the content of the user-specific processing on a basis of a history of execution instructions inputted by the user.

20. A display apparatus comprising a control apparatus as set forth in any one of claims 17 through 19.

21. A television receiver comprising a display apparatus as set forth in claim 20.

22. A method for controlling a display apparatus having a display section, comprising the steps of:
(a) recognizing a user recorded in advance;
(b) causing the display section to display a name of user-specific processing which is at least one processing associated in advance with the user recognized in the step (a); and
(c) accepting an instruction from the user to execute at least one of the user-specific processing and executing processing indicated by the instruction.

23. A control program for causing a computer to execute each step recited in claim 22.

24. A computer readable recording medium in which a control program as set forth in claim 23 is stored.
